# EUROPÄISCHE PATENTSCHRIFT

(11) **EP 3 302 074 B1**
(45) Veröffentlichungstag und Bekanntmachung des Hinweises auf die Patenterteilung: **10.07.2019**
(21) Anmeldenummer: 15726136.3
(22) Anmeldetag: 29.05.2015
(51) Int. Cl.: A22C 25/08, A22C 25/12

(54) **FISCH-ZUFÜHREINRICHTUNG, MIT DER FISCH-ZUFÜHREINRICHTUNG AUSGESTATTETES FISCH-ÜBERGABESYSTEM SOWIE VERFAHREN ZUM MASCHINELLEN ZUFÜHREN VON FISCHEN AN EINE FISCH-BEARBEITUNGSEINRICHTUNG**
FISH DELIVERY DEVICE, FISH-TRANSFER SYSTEM EQUIPPED WITH SAID FISH DELIVERY DEVICE, AND METHOD FOR THE AUTOMATED DELIVERY OF FISH TO A FISH PROCESSING DEVICE
DISPOSITIF D'AMENÉE DE POISSONS, SYSTÈME DE TRANSFERT DE POISSONS ÉQUIPÉ DU DISPOSITIF D'AMENÉE DE POISSONS ET PROCÉDÉ D'AMENÉE MÉCANIQUE DE POISSONS À UN DISPOSITIF DE TRAITEMENT DE POISSONS

(43) Veröffentlichungstag der Anmeldung: 11.04.2018
(73) Patentinhaber: Nordischer Maschinenbau Rud. Baader GmbH + Co. KG, 23560 Lübeck (DE)
(72) Erfinder: PAULSOHN, Carsten, 23568 Lübeck (DE)
(74) Vertreter: Stork Bamberger Patentanwälte PartmbB
(86) Internationale Anmeldenummer: PCT/EP2015/061993
(87) Internationale Veröffentlichungsnummer: WO 2016/192756

(56) Entgegenhaltungen:
- WO-A1-03/013262
- DD-A1- 225 326
- DE-A1- 2 939 625
- DE-A1- 19 522 238
- GB-A- 1 495 482

## Beschreibung

Die Erfindung betrifft eine Fisch-Zuführeinrichtung, eingerichtet zum maschinellen seriellen Empfangen und Abgeben von Fischen zum Zuführen der Fische an eine Fisch-Bearbeitungseinrichtung, umfassend einen jeden Fisch in Längslage aufnehmenden Ablageraum, ein den Fisch in der Längslage erfassendes und haltendes Abgabe-Fördermittel, mit dem die Fische zur Abgabe in Längslage mit dieser entsprechender Abgabe-Förderrichtung der Reihe nach förderbar sind. Die Erfindung bezieht sich auch auf ein Fisch-Übergabesystem, eingerichtet zur seriellen Übergabe von Fischen an eine Fisch-Bearbeitungseinrichtung, umfassend die Fisch-Zuführeinrichtung und ein die Fische von der Fisch-Zuführeinrichtung an einer Fisch-Übernahmestelle seriell übernehmendes Bearbeitungs-Fördermittel, das entlang eines Bearbeitungs-Förderweges im Abstand angeordnete Fisch-Mitnehmerelemente aufweist, die jeweils an der Fisch-Übernahmestelle zur Aufnahme und entlang des Förderweges zum Transport eines Fisches eingerichtet sind, wobei der Fisch-Übernahmestelle eine Fisch-Abgabestelle der Fisch-Zuführeinrichtung zugeordnet ist. Bei einem Verfahren, auf das sich die Erfindung gleichfalls bezieht, werden Fische seriell einer Fisch-Bearbeitungseinrichtung zugeführt, wobei die Fische einzeln an einer Ablagestelle in eine Halteposition mit Längsausrichtung gebracht werden und mit einem Abgabe-Fördermittel längs eines Abgabe-Förderwegs gefördert und an einer Fisch-Abgabestelle einer zugeordneten Fisch-Übernahmestelle seriell zugeführt werden, die Fisch-Mitnehmerelemente eines Bearbeitungs-Fördermittels der Fisch-Bearbeitungseinrichtung zur Übernahme der Fische passieren.

Fische, die in einer Fisch-Bearbeitungseinrichtung bearbeitet oder zur Bearbeitung transportiert werden, müssen besonders positioniert werden. Die Bearbeitung umfasst jede Be- oder Verarbeitung. Fische sind auch Fischrümpfe, zum Beispiel Fische mit abgetrenntem Kopf. Unter einer Fisch-Bearbeitungseinrichtung wird jede Einrichtung verstanden, die mit einem Bearbeitungs-Fördermittel ausgestattet ist, das Fische von einer Fisch-Zuführeinrichtung seriell empfängt, in einer Bearbeitungsposition aufnimmt und unter Beibehaltung der Position zum Bearbeiten weiter befördert. Eine derartige Fisch-Bearbeitungseinrichtung ist zum Beispiel Teil einer Fisch-Bearbeitungsmaschine, insbesondere einer Schlachtmaschine oder einer Entweidemaschine. Insbesondere weist eine Gesamtanlage mehrere Bearbeitungsmaschinen auf, die durch ein Fördersystem miteinander verknüpft werden. Zum Beispiel muss ein zu bearbeitender Fisch im Verlauf einer Gesamtförderstrecke nacheinander unterschiedliche Bearbeitungsmaschinen zum Durchführen unterschiedlicher Bearbeitungsvorgänge durchlaufen. Häufig müssen die Fische zum Transfer von einer Bearbeitungseinrichtung auf eine andere Bearbeitungseinrichtung zwischen unterschiedlichen Fördermitteln der Bearbeitungseinrichtungen gefördert werden. Zum Bearbeiten in einer einzelnen Fisch-Bearbeitungsmaschine und insbesondere in mehreren Fisch-Bearbeitungsmaschinen der Gesamtanlage innerhalb eines Gesamtförderungsprozesses kommt es wesentlich darauf an, dass die Fische in Bezug auf Organe oder Werkzeuge, die an jedem Fisch angreifen, möglichst positionsgenau und zeitgenau positioniert werden. Jede Ungenauigkeit oder gar Störung beim Einfördern der Fische in eine Fisch-Bearbeitungseinrichtung führt zu Folgen, die den Bearbeitungsprozess bis hin zu unbrauchbaren Bearbeitungsergebnissen und Maschinenstillstand beeinträchtigen. Eine besondere derartige Anfälligkeit besteht dann, wenn, wie grundsätzlich gewünscht, große Bearbeitungsgeschwindigkeiten und/oder Durchsatzraten erzielt werden sollen. Zum Beispiel beeinflusst die Zuführung zu bearbeitender Fische von einem Beschickförderer wie einem Förderband an ein Bearbeitungs-Fördermittel einer Schlacht-/Entweidemaschine unmittelbar das Schlachtungsergebnis und damit die Reinigungsgüte der Bauchhöhle des Fisches. Um ein hohes Maß an Effektivität von Reinigungswerkzeugen zu erzielen, muss jeder Fisch in besonders definierter Lage in die Fisch-Bearbeitungseinrichtung gelangen und durch diese hindurchgefördert werden.

Es sind verschiedene Einrichtungen zum Zuführen von Fischen an eine Bearbeitungseinrichtung, also zum Transfer von Fischen zwischen unterschiedlichen Fördermitteln bekannt geworden. Aus GB 1 495 482 A ist eine Fisch-Zuführeinrichtung bekannt, die eingerichtet ist zum maschinellen seriellen Empfangen und Abgeben von Fischen zum Zuführen der Fische an eine Fisch-Bearbeitungseinrichtung.

Aus DE 29 39 625 A1 und DE 195 22 238 A1 sind Fisch-Übergabesysteme mit einem Querförderer (Beschickmittel) und einem Längsförderer bekannt. Der Querförderer weist ein getaktetes Muldenband auf, von dem Fische an den Längsförderer übergeben und in Längsausrichtung weiter befördert werden. Der Längsförderer ist durch zwei parallel angeordnete Flankenförderer gebildet. Ein Transportmittel, an das die Fische abgegeben und auf dem sie zugleich positioniert werden, ist durch ein Bodenband zwischen den Flankenförderern gebildet, das mit Aufnahmen und Stützelementen versehen ist, auf die die Fische im Takt der Beschickung mit dem Querförderer unter gleichzeitiger Anlage an einer durch die Flankenförderer gebildeten Zuführrinne durch Abwurf aufzulegen sind. Gemäß DE 195 22 238 A1 ist, im Unterschied zu DE 29 39 625 A1, zwischen dem Querförderer und den Flankenförderern ein Auffangelement angeordnet, das zum Abwurf eines jeden Fisches auf die aktivierten Flankenförderer gesteuert wird, wobei zur Steuerung ein hinsichtlich einer einheitlichen Lage von Fisch-Bauchhöhlen korrigierter Fördertakt des Stützförderers mittels eines programmgesteuerten Rechners erzeugt wird, der mit einem fischgrößenabhängigen Steuersignal angesteuert wird. Den beiden bekannten Fisch-Übergabesystemen ist gemeinsam, dass das Fördermittel der Fisch-Bearbeitungseinrichtung zwischen den beim Abwurf des Fisches an diesem angreifenden Flankenförderern hindurchzuführen ist. Eine primäre Fischausrichtung wird von den aktiven Flankenförderern beeinflusst. In jedem Fall muss das Bearbeitungs-Fördermittel in den Längsförderer integriert werden. Durch diese Konstruktion sowie durch den Abwurf der Fische auf eine Fördereinrichtung mit mehreren aktiven zusammenwirkenden Fördermitteln bleibt die Überführung störungsanfällig, die Zuführgenauigkeit eingeschränkt und die Übergabegeschwindigkeit begrenzt. Es besteht eine weitgehende Abhängigkeit von Art und Anordnung des Bearbeitungs-Fördermittels und damit eine Einschränkung zur Übergabegestaltung und der Gestaltung von Maschinen oder Anlagen.

Aus WO 03/013262 A1 ist ein Fisch-Übergabesystem bekannt, das ein Fördermittel einer Fisch-Bearbeitungseinrichtung sowie ein quer dazu angeordnetes Beschickmittel aufweist. Das Beschickmittel wird durch eine Eintakteinheit gebildet, die als Positionierungshilfe für die Fische vorgesehen ist und zusammen mit einer Eintaktklappe des Bearbeitungs-Fördermittels angeordnet ist. Jeder vor der Eintaktklappe liegende Fisch wird mit seiner Längsachse parallel zu einer Abwurfkante der Fisch-Bearbeitungseinrichtung auf diese abgeworfen. Auch diese Fisch-Zuführung arbeitet mit dem unmittelbaren Abwurf von Fischen auf ein Bearbeitungs-Fördermittel, das in die Fisch-Zuführeinrichtung integriert ist. Infolge der Arbeitsweise der Eintaktklappe ist eine gezielte Übergabe von Fischen in den Förderungsbereich des Bearbeitungs-Fördermittels und damit auch das Erfassen der Fische durch Fisch-Mitnehmerelemente des Bearbeitungs-Fördermittels nicht ausreichend sicher und präzise. Die Zahl der zu bearbeitenden Fische pro Minute ist begrenzt. Insbesondere ist die gemäß WO 03/013262 A1 bekannte Zuführ-Einrichtung für eine optimale Übernahme mit einem Bearbeitungs-Fördermittel, das mit jeweils durch einen Klemmmechanismus gebildeten Fisch-Mitnehmerelementen ausgestattet ist, nicht geeignet.

Ziele der Erfindung bestehen darin, eine maschinelle automatische Fisch-Zuführung anzugeben, die hinsichtlich der Funktionssicherheit und der Genauigkeit zum Überführen von Fischen von einem Beschickungs-Fördermittel auf ein Bearbeitungs-Fördermittel wesentlich verbessert ist. Die Verbesserung soll auch mit relativ großer Fisch-Zuführgeschwindigkeit sowie mit einer definierten Ausrichtung der Fische in Längslage und mit ihrer Symmetrieebene erreicht werden. Die Fisch-Zuführung soll sich einfach und universell zwischen unterschiedliche Fördermittel einfügen lassen.

Die Ziele der Erfindung werden bei einer Fisch-Zuführeinrichtung in Verbindung mit den eingangs genannten Merkmalen dadurch erreicht, dass das Abgabe-Fördermittel zum unmittelbaren Zugriff auf einen in dem Ablageraum befindlichen Fisch angeordnet und ausgebildet sowie mit einem steuerbaren Positionierantrieb und einem steuerbaren Förderantrieb eingerichtet ist, die mit wenigstens einem Förder-Steuersignal steuerbar sind, das für ein an einen Förderbetrieb einer Fisch-Bearbeitungseinrichtung angepasstes Zuführen der Fische maßgeblich ist, wobei das Abgabe-Fördermittel mittels des steuerbaren Positionierantriebs in einen von dem Fisch in dem Ablageraum freigestellten ersten Zustand, in einen zum Erfassen, Halten und Fördern des Fisches auf diesen in dem Ablageraum zugreifenden zweiten Zustand und im Zusammenwirken mit dem steuerbaren Förderantrieb in einen dritten Zustand bewegbar ist, der den Fisch nach dem Fördern an einer Fisch-Abgabestelle, die durch einen gesteuerten Abgabe-Zeitpunkt mit zugehöriger gesteuerter Fisch-Abgabegeschwindigkeit definiert ist, freigibt.

In Verbindnung mit den Merkmalen des eingangs genannten Fisch-Übergabesystems wird dieses in Kombination mit der erfindungsgemäßen Fisch-Zuführeinrichtung gebildet. Die Ziele werden zudem in Verbindung mit den Merkmalen des eingangs genannten Verfahrens dadurch erreicht, dass die Fische an der Ablagestelle einzeln in die Halteposition innerhalb eines Zugriffsbereichs des Abgabe-Fördermittels gebracht werden, wobei sie sich in der Halteposition zunächst außer Eingriff mit dem Abgabe-Fördermittel befinden, dass das Abgabe-Fördermittel mittels einer elektrischen Steuerung nach Maßgabe von wenigstens einem Förder-Steuersignal in einen Förderzugriff auf den in der Halteposition befindlichen Fisch gesteuert wird und dass der in der Halteposition erfasste Fisch längs des Abgabe-Förderwegs zu der Fisch-Abgabestelle bewegt und dort freigegeben wird, wobei der Förderzugriff, die Abgabe-Förderbewegung und die Freigabe mit einem Abgabe-Zeitpunkt und einer Abgabe-Geschwindigkeit, zugehörig zu jedem Fisch, im Einklang mit Bewegung und Position der Fisch-Mitnehmerelemente elektrisch gesteuert werden, die die Fisch-Übernahmestelle passieren.

Man erreicht erfindungsgemäß eine Reihe von Vorteilen. Jeder Fisch wird in eine Ablageposition und damit in eine Ruhe-/Halteposition gebracht, die den Zuführbetrieb dadurch stabilisiert, dass sich das Abgabe-Fördermittel während der Ablageposition in dem ersten Zustand außer Eingriff mit dem Fisch befindet, dann aber durch gesteuertes Herbeiführen des zweiten Zustands unmittelbar auf den in dem Ablageraum befindlichen Fisch zur Abgabe-Förderung zugreift. Dabei kann der Ablageraum so eingerichtet werden, dass der Fisch vor der Förderung mittels des Ablageraums in Längslage und vorteilhaft auch mit definierter Ausrichtung seiner Symmetrieebene insbesondere in Rückenlage oder Bauchlage zu liegen kommt. Die Steuerung des Zugriffs, nämlich insbesondere eine definierte Zugriffsdauer für den zweiten Zustand in Verbindung mit der Freigabe des Fisches durch den dritten Zustand bewirken, dass der Fisch mit gesteuertem Abgabe-Zeitpunkt und zugehöriger gesteuerter Fisch-Abgabegeschwindigkeit definiert freigegeben wird. Die Beschleunigung und die Förder-Geschwindigkeit des Fisches mittels des Abgabe-Fördermittel werden gezielt gesteuert Die Freigabe erfolgt einfach durch Inaktivierung des Abgabe-Fördermittels, so dass es zur Freigabe keines Mittels bedarf, das zusätzlich an dem Fisch angreift. Die Fisch-Abgabestelle lässt sich daher weitgehend unabhängig von der Art des Bearbeitungs-Fördermittels an einer Bearbeitungseinrichtung anordnen sowie mit wählbarer Ausrichtung zum Anpassen an unterschiedliche Fisch-Mitnehmerelemente eines Bearbeitungs-Fördermittels vorsehen. Mittels der erfindungsgemäß vorgesehenen Fisch-Abgabestelle erreicht man optimale Genauigkeit und Funktionszuverlässigkeit der gesteuerten Abgabe auch für relativ große Fördergeschwindigkeiten des Bearbeitungs-Fördermittels. Insbesondere lässt sich die erfindungsgemäße Fischzuführung in Fisch-Bearbeitungsanlagen mit mehreren Fisch-Bearbeitungsmaschinen, wie grundsätzlich zum Beispiel aus WO 03/013262 A1 bekannt, einsetzen. Mittels der kombinierten Positions- und Zugriffssteuerung des Abgabe-Fördermittels lässt sich allgemein die Abgabesteuerung von seriell zu überführenden ausgerichteten Fischen hinsichtlich der zeitlichen und örtlichen Positionierung zum Überführen an Fisch-Mitnehmerelemente eines Bearbeitungs-Fördermittels wesentlich hinsichtlich Genauigkeit, Geschwindigkeit und Funktionszuverlässigkeit verbessern.

Zweckmäßig sind der Positionierantrieb und der Förderantrieb der Fisch-Zuführeinrichtung mit einem elektrischen Steuermittel verbunden, das mit wenigstens einem genannten Förder-Steuersignal beaufschlagbar ist. Eine bevorzugte Gestaltung besteht darin, dass die Steuerung der Abgabe-Geschwindigkeit an wenigstens eine Passiergeschwindigkeit von Mitnehmerelementen eines Bearbeitungs-Fördermittels einer Fisch-Bearbeitungseinrichtung anpasst ist. Vorteilhaft ist die Abgabe-Geschwindigkeit an der Fisch-Abgabestelle, die mit einer Fisch-Übernahmestelle der Fisch-Bearbeitungseinrichtung zusammenfällt, zumindest im Wesentlichen gleich der Geschwindigkeit des Bearbeitungs-Fördermittels. Das Abgabe-Fördermittel und das Bearbeitungs-Fördermittel sind dann in gleicher Höhe oder in gleichem Höhenbereich mit übereinstimmender Laufrichtung (Förderrichtung) angeordnet. Man erreicht, dass die Fisch-Mitnehmerelemente und die zu überführenden bzw. übernommenen Fische in optimale Übernahme-Wirkverbindung gelangen. Die Einrichtung und die Steuerung sind derart, dass die Wirkverbindung insbesondere hergestellt wird, wenn sich das Abgabe-Fördermittel noch in dem auf den Fisch zugreifenden zweiten Zustand befindet. Durch Herbeiführen des dritten Zustandes gelangt der abgegebene Fisch behinderungsfrei, das heißt ohne Beeinflussung durch ein zusätzliches Abgabe-Fördermittel oder einen zusätzlichen am Fisch angreifenden Mechanismus in die Förderung zur Bearbeitung.

Wenngleich das elektrische Steuermittel zum Beispiel indirekt durch eine Fisch-Bearbeitungseinrichtung, nämlich durch wenigstens einen vorgegebenen Parameter zum Ausführen eines Steuerprogramms gesteuert werden kann, so ist das elektrische Steuermittel zweckmäßig mit wenigstens einem von der Fisch-Bearbeitungseinrichtung abnehmbaren Förder-Steuersignal ansteuerbar.

Eine bevorzugte und besonders vorteilhafte Gestaltung besteht darin, dass die Fisch-Abgabestelle durch einen Abgabe-Förderweg bestimmt ist, der an einer Bezugsstelle, die einer einheitlichen Fischposition zugeordnet ist, beginnt und mit definierter Förderlänge an der Fisch-Abgabestelle endet. Zweckmäßig ist die der einheitlichen Fischposition zugeordnete Bezugsstelle durch ein Positions-Sensormittel bestimmt, das für jeden Fisch die Position einer definierten, sämtlichen Fischen einer Spezies gemeinsamen Körperstelle feststellt und ein entsprechendes genanntes Förder-Steuersignal erzeugt. Eine bevorzugte Maßnahme besteht darin, dass das Positions-Sensormittel zum Feststellen von einheitlichen, den gemeinsamen Körperstellen zugeordneten Zugriffsstellen der Fische eingerichtet ist, mit denen Fisch-Mitnehmerelemente eines Fördermittels einer Fisch-Bearbeitungseinrichtung in Eingriff bringbar sind. Eine bevorzugte Gestaltung besteht darin, dass das Positions-Sensormittel zum Feststellen von die gemeinsamen Körperstellen bildenden Schwanzwurzeln von schwanzvoraus geförderten Fischen eingerichtet ist. Eine entsprechende bevorzugte Gestaltung des Fisch-Übergabesystems besteht darin, dass die Fisch-Mitnehmerelemente jeweils durch einen Klemmmechanismus gebildet sind, der den Fisch zum Bearbeitungstransport am schwanzvoraus geförderten Fischschwanz klammert und mitnimmt. Eine derartige Schwanzklammerung ist zum Beispiel aus DE 198 29 376 A1 bekannt. Insbesondere ist das Bearbeitungs-Fördermittel durch einen endlos umlaufenden Kettenförderer gebildet, der um zwei Umlenkräder geführt und mit Fischaufnahmen bestückt ist, die aus einer Reihe von der Rückengeometrie der Fische angepassten Stützsegmenten wie Stützprismen bestehen und an ihrem vorauslaufenden Ende den Klemmmechanismus aufweisen, der aus einem Paar bezüglich ihres gegenseitigen Abstandes steuerbarer Klemmbacken gebildet ist.

Wenngleich für die Zwecke der Erfindung jedes Abgabe-Fördermittel geeignet ist, das mittels Steuerung in die drei Zustände zum Erfassen und Freigeben eines jeden Fisches setzbar ist, besteht eine bevorzugte und zweckmäßige Gestaltung darin, dass das Abgabe-Fördermittel zwei Förderelemente aufweist, die durch ein Paar von mittels des Positionierantriebs im Abstand veränderbaren Flankenförderern gebildet sind und zum Herstellen des ersten Zustands und des dritten Zustandes quer zur Fisch-Förderrichtung in einen zur Förderung inaktiven Öffnungsabstand auseinander bewegbar sowie zum Herstellen des zweiten Zustands quer zur Fisch-Förderrichtung in einen zur Förderung aktiven Schließabstand aufeinander zu bewegbar sind, wobei sie in dem zweiten Zustand an den Flanken eines Fisches zur Anlage kommen, insbesondere derart, dass die Fische in Position mit aufgerichteter Fisch-Symmetrieebene zu liegen kommen. Vorteilhaft ist der gesteuerte Positionierantrieb derart eingerichtet, dass die beiden Flankenförderer zur vorzugsweisen äquidistanten Änderung des Abstandes zwischen den Flankenförderern synchron bewegbar sind. Die Flankenförderer werden zweckmäßig durch Umlaufförderer gebildet, die mit gleicher Flankengeschwindigkeit antreibbar sind.

Zweckmäßig weist der Ablageraum ein Ablagemittel auf, das einen den Fisch im ersten Zustand sowie beim Herstellen und Erreichen des zweiten Zustands des Abgabe-Fördermittels aufnehmenden Ruhe-/Halteplatz bildet. Vorzugsweise ist der Ablageraum, insbesondere mit dem Ablagemittel, mit einem Profil ausgebildet, das an ein Querschnittsprofil der Fische angepasst ist, derart, dass jeder Fisch in eine aufgerichtete Position, insbesondere in zentrierte Position mit aufgerichteter Fisch-Symmetrieebene gelangt oder setzbar ist.

Eine vorteilhafte Gestaltung besteht darin, dass die Fisch-Zuführeinrichtung mit vorzugsweise einer ortsfesten, das heißt mit einer eine nicht-dynamische, stationäre Gleitanlage für den Fisch bildenden Gleit-Führungseinrichtung ausgestattet ist, die den Fisch zur Abgabe und während der Abgabe ausrichtet. Allgemein ist eine Führungseinrichtung zweckmäßig im Bereich des Ablageraums durch ein den Fisch ausrichtendes Ablagemittel sowie im Bereich des Abgabe-Fördermittels durch ein den Fisch in ausgerichteter Position haltendes Führungsmittel gebildet. In einer bevorzugten Ausführung weist die Gleit-Führungseinrichtung eine ortsfest angeordnete Gleit-Führungsschiene auf, die in einem stromaufwärts gelegenen Abschnitt das Ablagemittel bildet, das von oben beschickbar ist. Vorteilhaft wird ein stromabwärts gelegener Abschnitt der Gleit-Führungsschiene, in den der stromaufwärts gelegene Abschnitt übergeht, als ortsfestes, den Fisch unterseitig aufnehmendes Stütz-Förderelement ausgebildet. Eine bevorzugte Gestaltung besteht auch darin, dass das ortsfeste Stütz-Förderelement mit einem Transferabschnitt in Abgabe-Förderrichtung an dem Abgabe-Fördermittel frei hervorragt und in einem Fisch-Übergabebereich endet.

Insbesondere in Verbindung mit der Ausrichtung und Gleitführung des Fisches mittels der Gleit-Führungseinrichtung wird es möglich, dass Flankenförderer mit Fördergurten eingerichtet werden, deren Kontaktflächen, die als solche zur Kontaktanlage an den geförderten Fisch gelangen, zumindest im Wesentlichen parallel zueinander, insbesondere vertikal ausgerichtet sind. Ein Vorteil besteht darin, dass die Flankenförderer dadurch einen besonders wirksamen Zugriff auf den Fisch herstellen, wobei sie die Ausrichtung, die vorrangig durch die Gleit-Führungseinrichtung erfolgt, nur unterstützen. Insbesondere in Verbindung mit der genannten Gleit-Führungseinrichtung ist auch eine Einrichtung vorteilhaft, mit der die Flankenförderer zur anschmiegenden Längsanlage an einen zu fördernden Fisch gegen quer gerichtete, längsverteilte Kontaktkraft ausweichbar gehalten sind.

Eine weitere vorteilhafte Gestaltung der eine ortsfeste Gleitanlage für den Fisch bildende Gleit-Führungseinrichtung besteht darin, dass diese mit einer ortsfesten oberen Führungseinrichtung ausgestattet ist, die zwei einander gegenüberliegende stationäre Gleit-Führungswände aufweist, an die der Fisch zur seitlichen Gleit-Führungsanlage gelangt. Auch die obere Führungseinrichtung richtet den Fisch vor dem Förderbeginn aus und führt ihn während der Förderung. Vorteilhaft werden die Gleit-Führungswände gegen Rückstellkraft ausweichbar angeordnet und gehalten, derart, dass sie veränderbare, der Fischgröße angepasste Positionen zur leichtgängigen Gleitführung des Fisches einnehmen. Zweckmäßig erfasst auch die obere Führungseinrichtung den Ablageraum bzw. das Ablagemittel. Ein den Fisch in den Ablageraum bzw. auf das Ablagemittel einförderndes Beschickelement, insbesondere ein gesteuertes Klappenelement, ist dann oberhalb der oberen Führungseinrichtung angeordnet.

Wenngleich die Gleit-Führungseinrichtung insbesondere in Verbindung mit den Flankenförderern besonders vorteilhaft ist, so ist es auch möglich, dass die Abgabe-Fördereinrichtung mit einem den Fisch zur Förderung stützenden und ausrichtenden Boden-Fördermittel eingerichtet wird, das mit einer Fördergeschwindigkeit betreibbar ist, die einer durch die Flankenförderer bewirkten Fördergeschwindigkeit der Fische entspricht.

Allgemein kann die Fisch-Zuführeinrichtung zum Beschicken des Ablageraums mit Fischen ein Beschickungsmittel aufweisen, das durch einen Beschickförderer gebildet ist, der in den Ablageraum mündet und so eingerichtet ist, dass die zum Beschicken herangeförderten Fisch einzeln und nacheinander in den Ablageraum richtungsorientiert, zum Beispiel mit Schwanz voraus in Längslage, einförderbar sind.

Zweckmäßig ist der Beschickförderer mit Beschickrichtung quer zur Abgabe-Förderrichtung angeordnet. Eine zur seriellen Einförderung und Ablage von Fischen in dem Ablageraum eingerichtete Beschickungseinrichtung, die Bestandteil der Fisch-Zuführeinrichtung und/oder des Beschickungsmittels sein kann, zum Beispiel ein die Fische durch Schließen und Öffnen einzeln durchlassendes Klappenelement, kann mit einem steuerbaren Beschickungsantrieb ausgestattet sein, der mit wenigstens einem von einer Fisch-Bearbeitungseinrichtung abnehmbaren Förder-Steuersignal steuerbar ist.

Vorteilhaft ist das elektrische Steuermittel in Verbindung mit der Fisch-Bearbeitungseinrichtung so eingerichtet, dass das wenigstens eine Förder-Steuersignal die Geschwindigkeit der Fisch-Mitnehmerelemente sowie deren zeitliches Passieren der Fisch-Übernahmestelle erfasst. Vorzugsweise ist die Einrichtung derart, dass die Fisch-Abgabegeschwindigkeit an der Fisch-Abgabestelle in Übereinstimmung mit der Geschwindigkeit eines zugeordneten Fisch-Mitnehmerelements an der Fisch-Übernahmestelle gebracht wird.

Die Fisch-Mitnehmerelemente sind, wie oben beschrieben, insbesondere jeweils durch einen Klemmmechanismus gebildet, der den Fischschwanz eines auf dem Rücken oder dem Bauch liegenden Fisches, der schwanzvoraus gefördert wird, erfasst. Die Erfindung ist auf derartige Fisch-Mitnehmerelemente nicht beschränkt. Die Fisch-Mitnehmerelemente können allgemein durch Fisch-Halteelemente eines Bearbeitungs-Fördermittels gebildet sein, die einen Fisch in Bezug auf die einheitliche Körperstelle lagegenau aufnehmen, halten und transportieren. Zum Beispiel kommen Stützelemente, insbesondere in Form von Schubsätteln in Betracht, die jeweils lagegenau in die Bauchhöhle eines Fisches einfassen. Weiterhin sind Mulden oder konkave Ausnehmungen für sich oder zusätzlich möglich, die jeden Fisch lagegenau halten und transportieren.

Eine Gestaltung des Fisch-Übergabesystems besteht darin, dass zwischen dem Abgabe-Fördermittel und der Fisch-Übernahmestelle ein Transferabschnitt eingerichtet ist, der den Fisch, während er mittels des Abgabe-Fördermittels gefördert wird, auf ein zugeordnetes Mitnehmerelement an der Fisch-Übernahmestelle ausrichtet. Vorteilhaft wird das Ende einer Förderstrecke des Abgabe-Fördermittels, insbesondere der genannte Transferabschnitt, zumindest im Wesentlichen tangential auf den Laufweg des Bearbeitungs-Fördermittels der Fisch-Bearbeitungseinrichtung ausgerichtet. Eine bevorzugte Gestaltung des erfindungsgemäßen Verfahrens besteht darin, dass die Abgabe-Geschwindigkeit an wenigstens eine zugehörige Passiergeschwindigkeit der Mitnehmerelemente an der Fisch-Übernahmestelle angepasst wird. Insbesondere wird eine Übergabe nach Art einer Staffelholz-Übergabe erreicht, wobei die heranfördernde Abgabe-Förderrichtung im Wesentlichen mit der abfördernden Transportrichtung des Bearbeitungs-Fördermittels übereinstimmt. In diesem Fall und auch grundsätzlich wird die Fisch-Übernahmestelle als Stelle betrachtet, die mit der Fisch-Abgabestelle zusammenfällt. Die Übergabe ist auf eine im Wesentlichen gleiche Ausrichtung der Abgabe-Förderrichtung und der Bearbeitungs-Förderrichtung an der Fisch-Übernahmestelle nicht beschränkt. Wesentlich ist, dass der Fisch an der gemeinsamen Abgabe-/Übernahmestelle zeit- und positionsgenau an oder über dem zugehörigen Fisch-Mitnehmerelement zu liegen kommt. Die Übergabebewegung kann durch (tangentiale) Längsbewegung, aber auch, gegebenenfalls in Kombination, durch eine translatorisch oder kurvenförmig geführte Querbewegung quer zur Beschickungs-Förderrichtung erfolgen.

In Korrespondenz mit einer Gestaltung der Fisch-Zuführeinrichtung oder des Fisch-Übergabesystems wird zum Ausführen des Verfahrens mittels eines Positions-Sensormittels zur gesteuerten Abgabe-Förderung eine Fisch-Körperstelle festgestellt, die sämtlichen Fischen einer Spezies gemeinsam ist, wobei ein definierter Abgabe-Förderweg an der Fisch-Abgabestelle endet und mit einem eine Bezugsstelle definierenden Weganfang beginnt und mittels eines Positions-Sensormittels in Bezug auf den Weganfang die Fisch-Körperstelle festgestellt wird. Zum Beispiel kann für den Fall, dass eine Messung am bewegten Fisch durchgeführt wird, mit einem Positions-Sensormittel eine Steuergröße an einem Weganfang gemessen wird, der dann eine Mess-Bezugsstelle zur einheitlichen Fisch-Körperstelle bildet.

Eine bevorzugte Ausführung besteht darin, dass die Fische das Positions-Sensormittel zum Feststellen der Fisch-Körperstelle passieren. Im Ablageraum in Ruheposition veränderlich zu liegen kommende Fisch-Körperstellen können jedoch auch im Bereich des Ablageraums mittels einer Abtast-Sensoreinrichtung festgestellt und gemessen werden, und zwar in Bezug auf eine zur Steuerung definierte feste Basisposition, die dann mit dazu festgestellter und zur Förder-Steuerung berücksichtigter Lageabweichung den Förder-Weganfang definiert.

Eine besonders gestaltete Verfahrensmaßnahme besteht darin, dass die gesteuerte Abgabe der Fische an der Fisch-Abgabestelle wenigstens temporär intermittierend betrieben wird, derart, dass die Fisch-Abgabegeschwindigkeit zum Abgabezeitpunk Null beträgt oder kleiner oder größer als die Abgabe-Fördergeschwindigkeit vor der Abgabe ist. Die gesteuerte Abgabe der Fische kann auch wenigstens temporär derart betrieben werden, dass die Abgabe-Fördergeschwindigkeit des Abgabe-Fördermittels zum Abgabezeitpunkt kleiner oder größer als eine Bearbeitungs-Fördergeschwindigkeit der Fisch-Mitnehmerelemente einer Fisch-Bearbeitungseinrichtung ist.

Eine weitere Gestaltung besteht darin, dass an der Fisch-Übernahmestelle ein Übernahme-Sensormittel angeordnet ist, das mit der Steuerung zusammenwirkt und die Fisch-Übernahme feststellt, wobei im Fall einer nicht erfolgten Fischübernahme auf ein Fisch-Mitnehmerelement das Abgabe-Fördermittel so gesteuert und betrieben wird, dass der Fisch an der Fisch-Abgabestelle zur Übernahme auf ein nachfolgendes Fisch-Mitnehmerelement bis zur zugehörigen Freigabe, gegebenenfalls mit einem Versatz der Fisch-Abgabestelle in oder gegen die Abgabe-Förderrichtung, gehalten wird.

Vorteilhaft wird ein an der Fisch-Übernahmestelle auf ein Fisch-Mitnehmerelement nicht übernommener Fisch zum Ausschleusen aus dem Förderprozess freigegeben und abgeführt. Dies kann dadurch geschehen, dass die oben beschriebene Gleit-Führungseinrichtung oder eine andere den Fisch fördernde oder in Abgabeposition haltende Führungseinrichtung mit einer Ausschleuseeinrichtung derart eingerichtet ist, dass sie den Fisch freigibt. Statt einer solchen Freigabe kann eine Einrichtung auch derart sein, dass das Abgabe-Fördermittel im Eingriff mit dem Fisch in die entgegengesetzte Förderrichtung gesteuert wird und der Ablageraum zum Durchführen und Herausführen des zurückgeförderten Fisches eingerichtet ist. Eine andere Maßnahme besteht darin, dass ein von einem Fisch-Mitnehmerelement nicht korrekt erfasster Fisch von dem Bearbeitungs-Fördermittel mitgenommen wird und an dem Bearbeitungs-Fördermittel ein Ausschleusemittel angeordnet ist, dem der auszuschleusende Fisch zugeführt wird. Die Steuerung kann derart sein, dass ein noch an der Fisch-Ablagestelle befindlicher Fisch zum Ausschleusen freigegeben und auf das Bearbeitungs-Fördermittel abgelegt wird. An der Fisch-Übernahmestelle kann ein Übernahme-Sensormittel angeordnet sein, das die Fehllage auf dem Bearbeitungs-Fördermittel erkennt und ein entsprechendes Stör-Steuersignal abgibt.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als strukturell selbstständiges Detailbeispiel für andere nicht oder nicht vollständig beschriebene unter die Erfindung fallende Ausführungen und Gestaltungen zu verstehen. Gestaltungen oder Merkmale, die übergeordnete selbstständige Relevanz haben, werden insbesondere mit der Angabe "allgemein" hervorgehoben. Es zeigen
- Fig. 1: in Längsansicht ein erfindungsgemäßes Fisch-Übergabesystem mit einer erfindungsgemäßen Fisch-Zuführeinrichtung im Förderzustand und
- Fig. 2A - 2D: eine erfindungsgemäße Fisch-Zuführeinrichtung mit

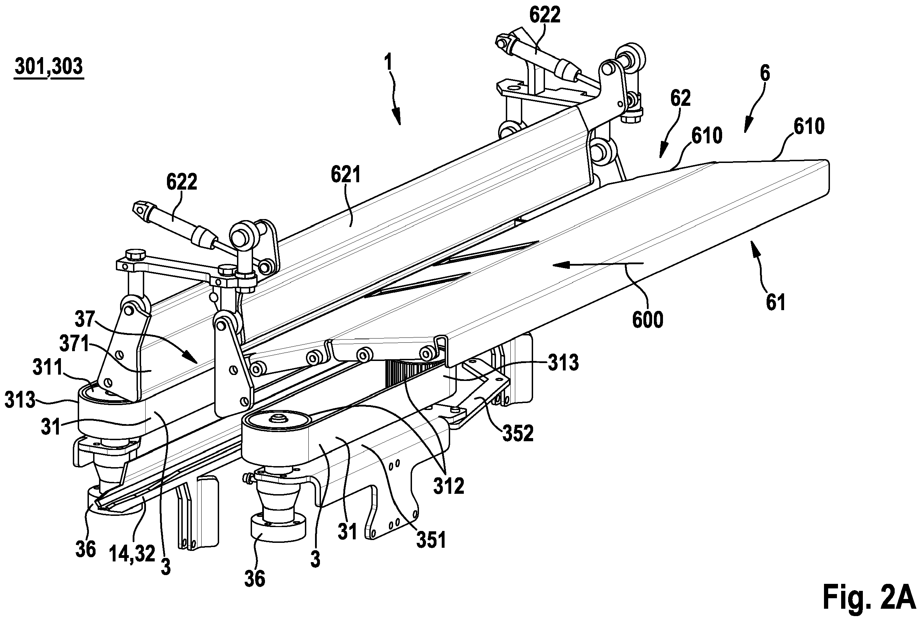

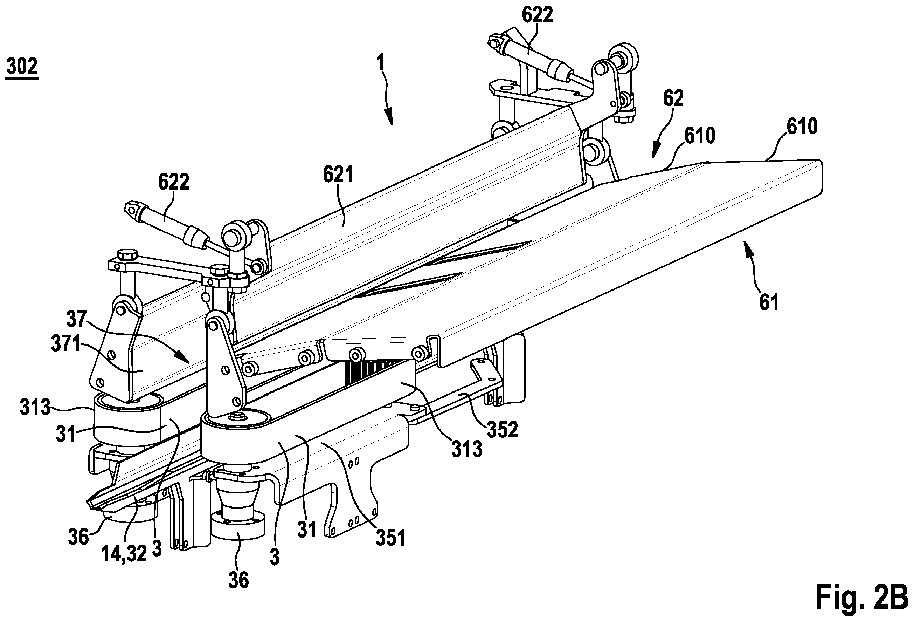

- Fig. 2A u. 2B: in axonometrischer Vorder-Längsansicht mit einem Abgabe-Fördermittel in inaktiver (Fig. 2A) und aktiver (Fig. 2B) Position,

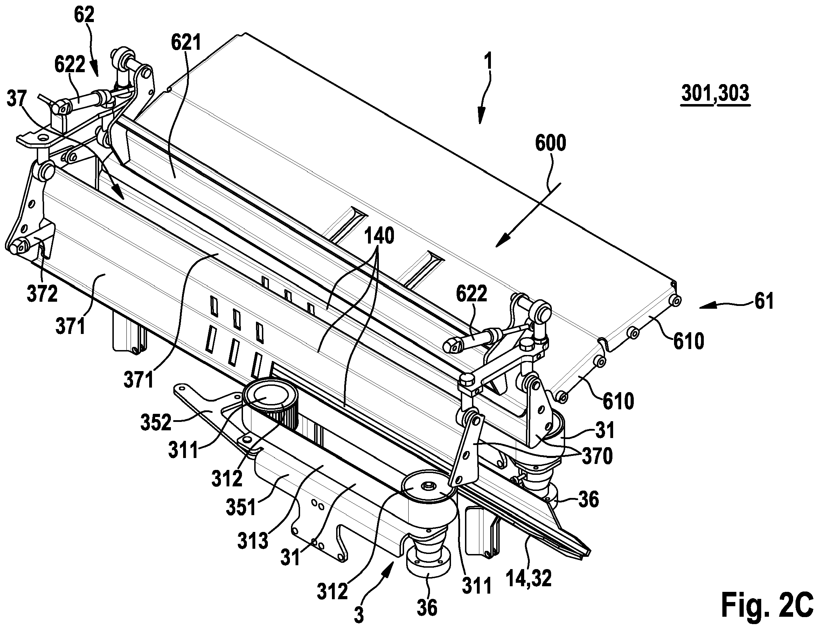

- Fig. 2C: in axonometrischer Rück-Längsansicht mit dem Abgabe-Fördermittel in inaktiver Position und

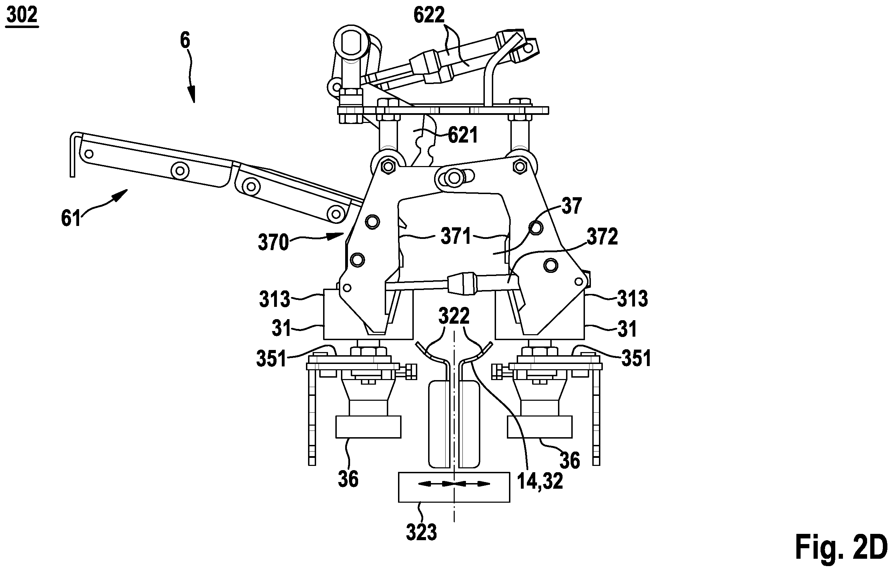

- Fig. 2D: in axonometrischer Rück-Stirnansicht mit dem Abgabe-Fördermittel in aktiver Position.

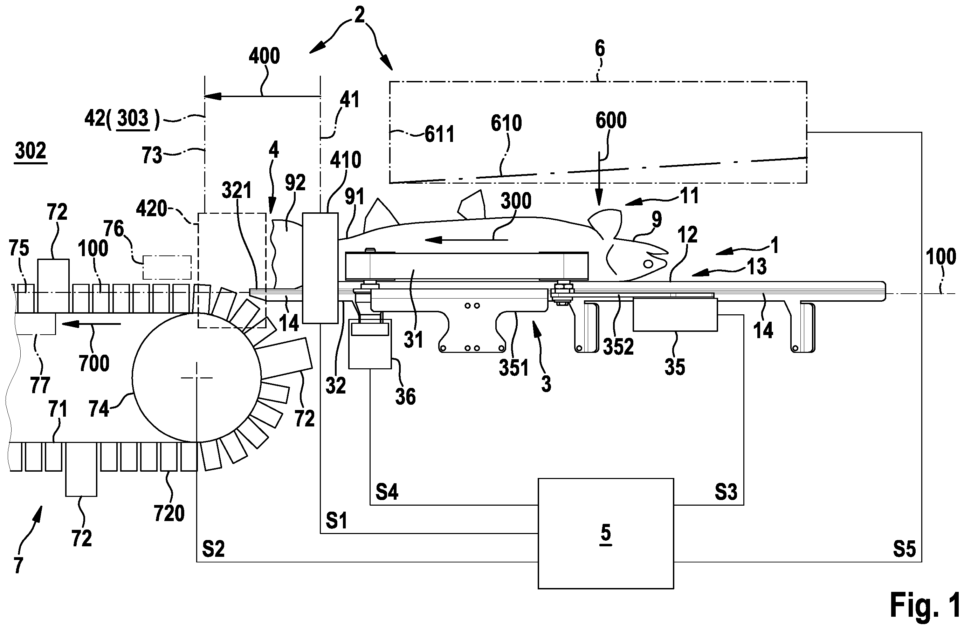

Wie aus Fig. 1 ersichtlich, ist ein erfindungsgemäßes Fisch-Übergabesystem 2 durch eine erfindungsgemäße Fisch-Zuführeinrichtung 1 und eine dieser nachgeordnete Fisch-Bearbeitungseinrichtung 7 gebildet. Ein Beschickungsmittel 6 mit einem Beschickförderer 61 und einer Beschickeinrichtung 62 ist an einer vorderen Längsseite (Vorder-Längsseite) der Fisch-Zuführeinrichtung 1 angeordnet. Das Beschickungsmittel 6 ist in Fig. 1 nur schematisch dargestellt und wird mit Fig. 2A bis 2D näher beschrieben. Die Einrichtungen und Bauteile sind an nicht dargestellten Rahmen, Konsolen, Gehäusen oder dergleichen Mittel angeordnet, gelagert und befestigt.

Das Fisch-Übergabesystem 2 ist mit einer elektrischen Steuereinrichtung 5 ausgestattet, die insbesondere einen Bestandteil der Fisch-Zuführeinrichtung 1 bildet und über Signalwege, im Ausführungsbeispiel Signalleitungen, in das Fisch-Übergabesystem 2 eingebunden ist. Über erste Signalwege ist eine Eingangssteuerung mit Steuersignalen S1 und S2 vorgesehen. Über zweite Signalwege wird ein Abgabe-Fördermittel 3 der Fisch-Zuführeinrichtung 1 mit Steuersignalen S3 und S4 angesteuert. Über einen dritten Signalweg wird das Beschickungsmittel 6, nämlich die Beschickungseinrichtung 62, mit einem Steuersignal S5 angesteuert.

Die Fisch-Zuführeinrichtung 1, die sich mit einer Vorrichtungslänge erstreckt, wird anhand der Fig. 2A bis 2D näher beschrieben. Sie weist einen Fische 9 in Längslage einzeln aufnehmenden Ablageraum 11 auf, der eingerichtet und angeordnet ist, um Fische 9 von der gesteuerten Beschickungseinrichtung 62 einzeln seriell zu empfangen. Der Ablageraum 11 weist ein sich in der Vorrichtungslänge erstreckendes Ablagemittel 12 mit einem V-förmigen Bodenprofil auf (s. insbesondere Fig. 2D), das an Querschnittsprofile der Fische 9 angepasst ist, so dass jeder Fisch 9 in eine zentrierte Position mit aufgerichteter Fisch-Symmetrieebene setzbar ist. Das Ablagemittel 12 fasst mit einem Abschnitt in einen eine Abgabe-Förderrichtung 300 bestimmenden Förderbereich des Abgabe-Fördermittels 3 ein, das durch einen in der Vorrichtungslänge ausgerichteten Längsförderer gebildet ist, mit dem die längsausgerichteten Fische 9 an ein Bearbeitungs-Fördermittel 71 der Fisch-Bearbeitungseinrichtung 7 zum Überführen der Fische 9 an die Fisch-Bearbeitungseinrichtung 7 förderbar sind.

Das Beschickungsmittel 6, das anhand der Fig. 2A bis 2D näher beschrieben wird, weist einen dem Ablagemittel 12 zugeordneten Beschickförderer 61 auf, der durch zwei in Reihe angeordnete Bodenplatten 610 gebildet ist, die oberhalb des Ablagemittels 12 vor einem sich in der Vorrichtungslänge erstreckenden Klappenelement 621 der Beschickungseinrichtung 62 angeordnet sind. Die Bodenplatten 610 und das Klappenelement 621 verlaufen, in der Vorrichtungslänge betrachtet, in Abgabe-Förderrichtung etwas nach unten geneigt. Die Bodenplatte 610, die an die Fisch-Zuführeinrichtung 1 angrenzt, und das Klappenelement 621 bilden einen entsprechend schräg ausgerichteten Beschickraum. Die Bodenplatten 610 bilden mit Beschickrichtung 600 einen quer zu der Vorrichtungslänge angeordneten Beschickweg, der zur Rutschförderung nach unten geneigt ist und die Fische 9 zum Beschicken der Fisch-Zuführeinrichtung 1 in Parallellage aufnimmt. Ein nicht dargestelltes Zuführ- und Ausrichtmittel fördert die Fische 9 in Parallellage in den Beschickförderer 61 ein, wobei sie so ausgerichtet werden, dass sie in Rückenlage mit ihrem Schwanz gegen eine nur in Fig. 1 schematisch dargestellte Anlage 611 des Beschickraums gelangen. Durch gesteuertes Öffnen und Schließen des schwenkbar angelenkten Klappenelements 621 mittels Aktuatoren 622, die mit der elektrischen Steuereinrichtung 5 verbunden sind, sind die Fische 9 in Längslage seriell auf das Ablagemittel 12 abwerfbar, wobei der Fisch 9 in Rückenlage zu liegen kommt und der Fischschwanz in Abgabe-Förderrichtung 300 vorausweist. In der Zeichnung ist das Klappenelement 621 in geschlossener Position dargestellt. Der abgeworfene Fisch 9 nimmt in dem Ablageraum 11 auf dem Ablagemittel 12 eine Ruhe- und Halteposition ein, die sich in Fig. 1 stromaufwärts des dort dargestellten Fisches 9 unter dem Beschickungsmittel 6 befindet. Allgemein kann das Klappenelement 621 durch jedes Beschickelement gebildet sein, das den Abwurf des Fisches 9 durch gesteuertes Öffnen und Schließen bewirkt. Das Beschickelement kann ein unmittelbarer Bestandteil der Fisch-Zuführeinrichtung 1 sein und - wie im Ausführungsbeispiel - an dieser angeordnet sein.

Eine allgemeine Gestaltung besteht darin, dass der Längsförderer des Abgabe-Fördermittels 3 durch zwei Flankenförderer 31 gebildet ist, die in der Vorrichtungslänge an einer geraden Förderstrecke 100 einander gegenüberliegend angeordnet sind. Insbesondere weist die Förderstrecke 100 eine Führungsschiene 14 auf, die Bestandteil einer stationären Gleit-Führungseinrichtung 140 ist. Ein stromaufwärts gelegener Abschnitt der Führungsschiene 14 bildet das Ablagemittel 12, das in einen stromabwärts gelegenen Führungsschienen-Abschnitt übergeht, der als Bestandteil des Abgabe-Fördermittels 3 ein ortsfestes Stütz-Förderelement 32 bildet, das mit einem Transferabschnitt 321 in Abgabe-Förderrichtung 300 an dem Abgabe-Fördermittel 3 frei hervorragt und in einem Fisch-Übergabebereich 420 endet. Allgemein ist jeder Flankenförderer 31 durch einen Umlauf-Förderer mit einem um ein Rollenpaar 312 endlos geführten Fördergurt 313 gebildet. Längs der Förderstrecke 100 einander zugewandte Kontaktflächen der Fördergurte 313 sind im Wesentlichen vertikal ausgerichtet. Während der Förderung kommen die Fische an der Führungsschiene 14 in Gleitanlage zu liegen, wobei sie einheitlich aufgerichtet und ausgerichtet werden.

Die Flankenförderer 31 sind mit einem Positionierantrieb 35 und einem Förderantrieb 36 verbunden. Der Positionierantrieb 35 ist zum steuerbaren Positionieren der Flankenförderer 31 derart eingerichtet, dass die Flankenförderer 31 quer zur Förderstrecke 100 und in Höhe des zu fördernden Fisches 9 auseinander bewegbar sowie aufeinander zubewegbar sind. Dabei bleiben die Kontaktflächen der Fördergurte 313 im Wesentlichen in Parallellage. Die Umlenkrollen 311 und Antriebsorgane, z. B. Servomotoren, des Förderantriebs 36, die jeweils eine Rolle der Rollenpaare 312 antreiben, sind an Konsolen 351 angeordnet, die über ein in der Zeichnung nur teilweise dargestelltes Gestänge 352 mit dem Positionierantrieb 35 verbunden sind. Zudem sind die Konsolen 351 derart angeordnet und gelagert, dass die Flankenförderer 31 zur anschmiegenden Anlage an einen zu fördernden Fisch 9 gegen quergerichtete Kontaktkraft ausweichbar gehalten sind.

Die elektrische Steuereinrichtung 5 steuert den Positionierantrieb 35 mit dem Steuersignal S3 derart, dass dieser das Paar der Flankenförderer 31 in drei Zustände setzt. In einem ersten Zustand 301, der in Fig. 2A und 2C dargestellt ist, befinden sich die Flankenförderer 31 in einem voneinander beabstandeten Zustand, der zwischen den Flankenförderern 31 einen Teil des Ablageraums 11 bildet, wobei ein in den Ablageraum 11 abgeworfener Fisch 9 von dem Abgabe-Fördermittel 3 freigestellt ist. Die Kontaktflächen der Fördergurte 313 befinden sich dann in einer inaktiven (offenen) Position außer Fördereingriff mit den seitlichen Flanken des Fisches 9.

In einem zweiten Zustand 302, nämlich in einer aktiven (geschlossenen) Position erfassen die Flankenförderer 31 unmittelbar den in dem Ablageraum 11 abgelegten Fisch 9. Die Kontaktflächen der Fördergurte 313 kommen an den Flanken des Fisches 9 zur Kontaktanlage. Die Flankenförderer 31 werden vorzugsweise gleichmäßig in eine zur Förderstrecke 100 spiegelbildliche Position gebracht, derart, dass der Fisch 9 zusätzlich zur Ausrichtung mittels der Führungsschiene 14 in seiner Position mit aufgerichteter Fisch-Symmetrieebene zentriert wird. In dem zweiten Zustand 302 lässt sich ein erfasster Fisch 9 in Abgabe-Förderrichtung 300 mit durch den Förderantrieb 36 gesteuerter Abgabe-Fördergeschwindigkeit beschleunigen und fördern. Eine Position des geförderten Fisches 9 ist in Fig. 1 dargestellt.

Ein durch die Steuerung herbeiführbarer dritter Zustand 303 entsteht dadurch, dass das Abgabe-Fördermittel 3 aus dem zweiten Zustand 302 in einen Öffnungszustand versetzt wird, in dem der Fisch 9 freigegeben wird. Die Flankenförderer 31 werden vorzugsweise äquidistant von der Förderstrecke 100 bzw. dem Fisch 9 distanziert. Der in der genannten Zustands-Reihenfolge herbeigeführte dritte Zustand 303 entspricht dem ersten Zustand 301. Der Fördereingriff des Abgabe-Fördermittels 3 an dem Fisch 9 ist beseitigt. Der geöffnete Zwischenraum zwischen den Flankenförderern 31 steht zur Ablage und zum Fördereingriff für einen nachfolgenden Fisch 9 zur Verfügung.

Im Zusammenwirken mit den genannten Aggregaten und Baukomponenten kommt der Steuerung der Zustände besondere Bedeutung zu. Allgemein ist wesentlich, dass der Fisch 9 mittels des Abgabe-Fördermittels 3 an eine definierte Fisch-Abgabestelle 42 gefördert wird. Die Fisch-Abgabestelle 42 ist ein definierter Ort, an dem ein vorauslaufender Fischteil zu einem definierten Zeitpunkt anwesend ist, wobei diese Fisch-Abgabestelle 42 in Bezug auf die Förderstrecke 100 der Fisch-Zuführeinrichtung 1 grundsätzlich als ortsfeste Stelle zu betrachten ist. Die Fisch-Abgabestelle 42 ist weiter dadurch definiert, dass der genannte Fischteil zu dem definierten Zeitpunkt nicht nur an der Fisch-Abgabestelle 42 anwesend ist, sondern auch zu diesem Zeitpunkt (Abgabe-Zeitpunkt) der Fördereingriff des Abgabe-Fördermittels 3 an dem Fisch 9 durch gesteuertes Herbeiführen des Zustandes 303 beendet wird. Die Maßnahmen gelingen erfindungsgemäß allgemein dadurch, dass vor der Abgabe-Förderung in der Fisch-Ruheposition und/oder während der Abgabe-Förderung eine Referenzposition des Fisches 9 als Steuergröße zur Steuerung mittels des elektrischen Steuermittels 5 erfasst wird, wobei nach Vorgaben für einen Abgabe-Zeitpunkt in Kombination die Förderung sowie die Freigabe des Fisches 9 mittels des Förderantriebs 36 und des Positionierantriebs 35 gesteuert werden.

Es lassen sich verschiedene Steuerungsmuster mit Vorgaben bzw. Steuergrößen wählen. Ein Steuerablauf besteht darin, dass dann, wenn ein Fisch-Referenzteil die Fisch-Abgabestelle 42 erreicht, zu diesem Zeitpunkt (Orts-Zeitpunkt) mittels des Förderantriebs 36 die Förderung gestoppt wird, so dass der Fisch 9 in einer Position auf der Führungsschiene 14 - mit im Beispiel einem an dem Stütz-Förderelement 32 überstehenden Fischteil, nämlich dem Fischschwanz - ruht. Die Fisch-Abgabegeschwindigkeit beträgt dann zum Zeitpunkt der Abgabe Null. Die Steuerung kann derart sein, dass der Orts-Zeitpunkt mit dem Fisch-Abgabezeitpunkt - Freigabe durch Herbeiführen des dritten Zustands 303 - zusammenfällt. Der Fisch-Abgabezeitpunkt kann aber auch zeitlich gesteuert nachfolgen.

Ein Steuerablauf besteht darin, dass der Förderantrieb 36 so gesteuert wird, dass ein Fisch-Referenzteil zum Fisch-Abgabezeitpunkt an der Fisch-Abgabestelle 42 eine Geschwindigkeit aufweist, die größer als Null ist. Vorteilhaft kann die Steuerung so gewählt werden, dass die Fisch-Abgabegeschwindigkeit im Wesentlichen mit der Geschwindigkeit des Bearbeitungs-Fördermittels 71 der Fisch-Bearbeitungseinrichtung 7 übereinstimmt, die Differenz zwischen den beiden Geschwindigkeiten also Null oder möglichst gering ist. Die Steuerung kann auch derart sein, dass die Fisch-Abgabegeschwindigkeit durch entsprechende Steuerung des Förderantriebs 36 gezielt kleiner oder größer als die Geschwindigkeit des Fördermittels 71 der Fisch-Bearbeitungseinrichtung 7 herbeigeführt wird.

Die Steuerung ist auf die genannten Steuerabläufe für sich oder in Kombination nicht eingeschränkt. Insbesondere kann mittels des elektrischen Steuermittels 5 jede Steuerung eingerichtet werden, die die Steuerung des Positionierantriebs 35 und die Steuerung des Förderantriebs 36 miteinander kombiniert, wobei insbesondere Mischformen der genannten Steuerabläufe vorgesehen werden können. Das elektrische Steuermittel 5 kann durch jede übliche rechnerbetriebene oder rechnergestützte, zum Beispiele mit geeigneten Schnittstellen versehene Steuereinrichtung gebildet sein, die Abläufe und Zustände in Abhängigkeit von ermittelten Steuergrößen, Funktionen und/oder Programmen steuert und/oder regelt. Übliche Prozessoren können verwendet werden. Das Steuermittel kann Bestandteil des Systems, einer Gesamtanlage oder -maschine sein oder, wie im Ausführungsbeispiel, als Bestandteil der Fisch-Zuführeinrichtung 1 vorgesehen sein. Komponenten des Steuermittels 5 können auf Betriebs-/Funktions-Bereiche des Fisch-Übergabesystems 2 verteilt sein und in Wirkverbindung betrieben werden.

Im Ausführungsbeispiel ist das Fisch-Referenzteil der Fischschwanz, der eine Zugriffsstelle 92 bildet, an der der Fisch zum Fördern in der Fisch-Bearbeitungseinrichtung 7 mittels eines Fisch-Mitnehmerelements 72 erfasst wird. Die Zugriffsstelle 92 wird durch eine zu dem Fischschwanz gehörende signifikante Körperstelle 91, nämlich die Schwanzwurzel des schwanzvorausgeförderten Fisches 9 festgestellt. Die Schwanzwurzeln sind Körperstellen, die die Fische 9 anatomisch einheitlich und gemeinsam aufweisen. Dadurch erhält man für unterschiedliche und/oder schwankende Fischgrößen einen einheitlichen Bezug zu positionsgenau zu bearbeitenden Körperteilen.

Im Ausführungsbeispiel ist an der Förderstrecke 100 am Anfang des Transferabschnittes 321 ein Sensor 410 angeordnet, der die Schwanzwurzel unmittelbar beim Austritt aus dem Abgabe-Fördermittel 3 feststellt und eine entsprechende Steuergröße in Form des Signals S1 an die elektrische Steuereinrichtung 5 abgibt. Die genannte Fisch-Abgabestellte 42 wird durch einen Abgabe-Förderweg 4 bestimmt, der an einer Bezugsstelle 41 beginnt und mit definierter Förderlänge 400 an der Fisch-Abgabestelle 42 endet. Die Bezugsstelle 41 ist durch die an der Förderstrecke 100 ortsfeste Stelle bestimmt, an der das Positions-Sensormittel 410 zeitlich und örtlich den Vorbeigang der Schwanzwurzel misst. Das Positions-Sensormittel 410 kann durch jedes Mittel, das eine signifikante Ortsstelle am Fischkörper erfasst, gebildet sein. Zum Beispiel wird ein Lichtschranken-Sensor eingesetzt. Andere Beispiele sind übliche Messfahnen, die durch die zu messende Ortsstelle ausgelenkt werden.

Im Ausführungsbeispiel ist der Führungsschiene 14, auf der der geförderte Fisch 9 ausgerichtet wird und entlanggleitet, eine obere Führungseinrichtung 370 der Gleit-Führungseinrichtung 140 oberhalb der Führungsschiene 14 zugeordnet, die, wie insbesondere aus Fig. 2C und 2D ersichtlich, dachförmig mit zwei Führungswänden 371 ausgebildet ist, die zwischen sich einen den auf dem Rücken liegenden Fisch 9 im Bauchbereich gleitend führenden Führungs-/Förderraum 37 ausbilden und im Bereich der Flankenförderer 31 ausgeschnitten sind. Die obere Führungseinrichtung 370 ist in Fig. 1 nicht dargestellt. Die Führungswände 371 sind mittels eines Aktuators 372 gegen Rückstellkraft schwenkbar angelenkt, derart, dass sie veränderbare, der Fischgröße angepasste Positionen zur Gleitführung des Fisches 9 einnehmen. Das Klappenelement 621 oder ein anderes die Beschickung durch Öffnen und Schließen bewirkendes Beschickelement ist oberhalb der oberen Führungseinrichtung 370 angeordnet, derart, dass jeder Fisch von oben in den Ablageraum 11 gelangt, der Bestandteil des Führungsraums 37 der oberen Führungseinrichtung 370 ist.

Im Ausführungsbeispiel ist die Fisch-Bearbeitungseinrichtung 7 mit einem für das Fisch-Übergabesystem 2 wesentlichen Förderabschnitt dargestellt, der durch das Bearbeitungs-Fördermittel 71 in Form eines üblichen endlosen Kettenförderers oder dergleichen gebildet ist. Dieser ist mit Fischaufnahmen bestückt, die zum Beispiel aus einer Reihe von Stützprismen 720 bestehen und an ihrem vorauslaufenden Ende jeweils einen mit Schwanzklammer versehenen Klemmmechanismus aufweisen, der zum Beispiel das Fisch-Mitnehmerelement 72 bildet.

Der Kettenförderer wird an einer Umlenkrolle 74 umgelenkt, so dass er entlang einer Bearbeitungs-Förderstrecke 75 in Transportrichtung 700 läuft. Das Stütz-Förderelement 32 ist mit seinem Transferabschnitt 321 tangential auf den Zenitbereich der Umlenkrolle 74 ausgerichtet, wobei die Fischaufnahmen in gerader Verlängerung der Förderstrecke 100 der Fisch-Zuführeinrichtung 1 zu liegen kommen. Jedes Fisch-Mitnehmelement 72 erfasst einen Fischschwanz des mit der Fisch-Zuführeinrichtung 1 herangeförderten Fisches 9 in dem Übergabebereich 420, der zum größten Teil von dem Transferabschnitt 321 frei ist und im Bereich vor dem Rollenzenit vorgesehen ist. Der Zugriff des Fisch-Mitnehmerelements 72 auf den Fischschwanz ist an einer Fisch-Übernahmestelle 73 abgeschlossen. Die Fisch-Übernahmestelle 73 wird als Stelle betrachtet, die mit der Fisch-Abgabestelle 42 korrespondiert und insbesondere mit dieser zusammenfällt. Die bereits beschriebene Orts-, Zeit- und Geschwindigkeitssteuerung an der Fisch-Abgabestelle 42 erfolgt derart, dass der Fisch 9 mit seinem Schwanz positionsgenau und mit gesteuerter Geschwindigkeit an das zugehörig passierende Fisch-Mitnehmerelement 72 überführt wird. Insbesondere wird, wie bereits beschrieben, der Fisch 9 mit an die Förderketten-Geschwindigkeit angepasster, insbesondere mit im Wesentlichen gleicher momentaner Fisch-Abgabegeschwindigkeit überführt.

Das Fisch-Übergabesystem 2 kann, wie dargestellt, derart eingerichtet sein, dass der Betrieb der Fisch-Zuführeinrichtung 1 mit einem von der Fisch-Bearbeitungseinrichtung 7 abgenommenen Steuersignal S2, zum Beispiel einem Fördersignal gesteuert wird. Insbesondere ist das Steuersignal S2 ein einem Fördertakt des Bearbeitungs-Fördermittels 71 entsprechendes Steuer-Taktsignal. Das Steuersignal S2 wird allgemein mittels eines nicht dargestellten Signalgebers gewonnen, der zum Beispiel die Geschwindigkeit der Fisch-Mitnehmerelemente 72 und/oder deren zeitliches Passieren der Fisch-Übernahmestelle 73 bzw. des Übergabebereichs 420 erfasst. Die Steuerung kann auch so eingerichtet sein, dass das insbesondere mittels der Aktuatoren 622 betriebene gesteuerte Öffnen und Schließen des Klappenelements 621 der Beschickungseinrichtung 62 im Takt des Bearbeitungs-Fördermittels 71 der Fisch-Bearbeitungseinrichtung 71 durchgeführt wird. Das elektrische Steuermittel 5 kann anstelle einer direkten Steuerverbindung mit der Fisch-Bearbeitungseinrichtung 7 zur Vorgabe von wenigstens einer dem Steuersignal S2 entsprechenden Steuergröße mit wenigstens einem Steuerparameter betrieben werden, der definiert einer Betriebs-/Funktionskonstellation der Fisch-Bearbeitungseinrichtung 7 zur Fischübernahme zugeordnet ist.

Die Fisch-Bearbeitungseinrichtung 7 kann allgemein mit einem in Fig. 1 nur strichpunktiert dargestellten Übernahme-Sensormittel 76 ausgestattet werden, das an der Fisch-Übernahmestelle 73 die Fischübernahme überwacht. Es wird dann zum Beispiel eine Steuerverbindung mit dem elektrischen Steuermittel 5 eingerichtet, derart, dass im Fall einer nicht erfolgten Fischübernahme auf ein Fisch-Mitnehmerelement 72 das Abgabe-Fördermittel 3 so gesteuert und betrieben wird, dass der Fisch 9 an der Fisch-Abgabestelle 42 zur Übernahme auf ein nachfolgendes Fisch-Mitnehmerelement 72 bis zur zugehörigen Freigabe gehalten wird. Eine Besonderheit kann allgemein darin bestehen, dass die Fisch-Abgabestelle 42 temporär oder dauerhaft, insbesondere in Richtung hin zu der Fisch-Bearbeitungseinrichtung 7, versetzt wird. Ein solcher gesteuerter Versatz wird dadurch ausgeführt, dass der noch von dem Abgabe-Fördermittel 3 gehaltene Fisch 9 mittels des Abgabe-Fördermittels 3 ein geringes Stück, mit dem der Zenitbereich der Umlenkrolle 72 nicht verlassen wird, vor- oder zurückgefördert wird, wobei er zur Abgabe mit definiert gesteuerter Geschwindigkeit, einschließlich einer Geschwindigkeit Null (erneute Ruheposition), erneut gefördert wird.

Das elektrische Steuermittel 5 kann allgemein für einen Betrieb bei einer Fisch-Übernahmestörung derart eingerichtet, dass ein an der Fisch-Übernahmestelle 73 auf ein Fisch-Mitnehmerelement 72 nicht ordnungsgemäß übernommener Fisch an der Fisch-Abgabestelle 42 zum Ausschleusen aus dem Förderprozess freigegeben und abgeführt wird. Zum Beispiel kann die Steuerung in Verbindung mit einem in Fig. 1 nur strichpunktiert dargestellten Ausschleusemittel 77 derart eingerichtet sein, dass der Fisch 9 über das Bearbeitungs-Fördermittel 71 ausgeschleust wird, in dem der Fisch 9, ohne dass er von den Fisch-Mitnehmerelementen 72 erfasst wird, an das Bearbeitungs-Fördermittel 71 abgegeben wird und zu dem Ausschleusemittel 77, das an dem Bearbeitungs-Fördermittel angeordnet ist, bewegt wird. Ein Ausführungsbeispiel für die gesteuerte Ausschleuse-Stelle besteht auch darin, dass das Stütz-Förderelement 32 im Bereich des Transferabschnitts 321 oder auch die gesamte Führungsschiene 14 mit einem ansteuerbaren Ausschleuse-Mechanismus 323 zum bodenseitigen Öffnen und Auswerfen eines Fisches 9 eingerichtet werden. Ein solcher Mechanismus wird in Fig. 2D schematisch dargestellt. Das Stütz-Förderelement 32 bzw. die Führungsschiene 14 ist zweiteilig mit Bodenteilen 322 ausgebildet, die mit einem mit dem elektrischen Steuermittel 5 steuerbaren Mechanismus 323 zum Öffnen und Schließen des Förderbodens querbewegbar angeordnet sind. Im Fall einer Betriebsstörung oder einer nicht erfolgten Fischübernahme wird der Boden durch Ansteuerung des Mechanismus 323 geöffnet, so dass der Fisch 9 aus der Förderstrecke 100 nach unten herausfällt.

Aus vorstehender Beschreibung resultieren insbesondere folgende Funktionen und erfindungsgemäße Verfahrensmaßnahmen.

Die Fische 9 werden in Längsausrichtung an der Ablagestelle 13 einzeln in die Halte-/ Ruheposition innerhalb des insbesondere durch die Flankenförderer 31 gebildeten Zugriffsbereichs des Abgabe-Fördermittels 3 gebracht. In der Halte-/Ruheposition befindet sich das Abgabe-Fördermittel 3 außer Eingriff mit dem Fisch 9. Das Abgabe-Fördermittel 3 wird mittels der Steuerung des elektrischen Steuermittels 5 nach Vorgabe von in Förder-Steuersignale umgesetzten Steuergrößen in den Förderzugriff auf den in der Halte-/Ruheposition befindlichen Fisch 9 gesteuert. Der in der Halte-/Ruheposition erfasste Fisch 9 wird längs des definierten Abgabe-Förderwegs 4 zu der Fisch-Abgabestelle 42 bewegt und dort zum zeit- und positionsgenauen, vorteilhaft auch geschwindigkeits-definierten Erfassen durch die Fisch-Mitnehmerelemente 72 der Fisch-Bearbeitungseinrichtung 7 freigegeben, wobei die Abgabe-Förderbewegung und die Freigabe mit dem Abgabe-Zeitpunkt und der insbesondere definierten momentanen Abgabe-Geschwindigkeit, zugehörig zu jedem Fisch 9, im Einklang mit dem Betrieb der Fisch-Mitnehmerelemente 72 gesteuert werden, die die Fisch-Übernahmestelle 73 passieren.

## Patentansprüche

1. Fisch-Zuführeinrichtung (1), eingerichtet zum maschinellen seriellen Empfangen und Abgeben von Fischen (9) zum Zuführen der Fische (9) an eine Fisch-Bearbeitungseinrichtung (7), umfassend einen jeden Fisch (9) in Längslage aufnehmenden Ablageraum (11), ein den Fisch (9) in der Längslage erfassendes und haltendes Abgabe-Fördermittel (3), mit dem die Fische (9) zur Abgabe in Längslage mit dieser entsprechender Abgabe-Förderrichtung (300) der Reihe nach förderbar sind, **dadurch gekennzeichnet, dass** das Abgabe-Fördermittel (3) zum unmittelbaren Zugriff auf einen in dem Ablageraum (11) befindlichen Fisch (9) angeordnet und ausgebildet sowie mit einem steuerbaren Positionierantrieb (35) und einem steuerbaren Förderantrieb (36) eingerichtet ist, die mit wenigstens einem Förder-Steuersignal (S3, S4) steuerbar sind, das für ein an einen Förderbetrieb einer Fisch-Bearbeitungseinrichtung (7) angepasstes Zuführen der Fische (9) maßgeblich ist, wobei das Abgabe-Fördermittel (3) mittels des steuerbaren Positionierantriebs (35) in einen von dem Fisch (9) in dem Ablageraum (11) freigestellten ersten Zustand (301), in einen zum Erfassen, zentrierten Halten und Fördern des Fisches (9) auf diesen in dem Ablageraum (11) zugreifenden zweiten Zustand (302) und im Zusammenwirken mit dem steuerbaren Förderantrieb (36) in einen dritten Zustand (303) bewegbar ist, der den Fisch (9) nach dem Fördern an einer Fisch-Abgabestelle (42), die durch einen gesteuerten Abgabe-Zeitpunkt mit zugehöriger gesteuerter Fisch-Abgabegeschwindigkeit definiert ist, freigibt.

2. Fisch-Zuführeinrichtung nach Anspruch 1, **dadurch gekennzeichnet, dass** der Positionierantrieb (35) und der Förderantrieb (36) der Fisch-Zuführeinrichtung (1) mit einem elektrischen Steuermittel (5) verbunden sind, das mit wenigstens einem genannten Förder-Steuersignal beaufschlagbar ist und die Abgabe-Geschwindigkeit und den Abgabe-Zeitpunkt eines jeden Fisches (9) steuert.

3. Fisch-Zuführeinrichtung nach Anspruch 1 oder 2, **dadurch gekennzeichnet, dass** die Fisch-Abgabestelle (42) durch einen Abgabe-Förderweg (4) bestimmt ist, der an einer Bezugsstelle (41), die einer einheitlichen Fischposition zugeordnet ist, beginnt und mit definierter Förderlänge (400) an der Fisch-Abgabestelle (42) endet.

4. Fisch-Zuführeinrichtung nach Anspruch 3, **dadurch gekennzeichnet, dass** der Bezugsstelle (41) ein Positions-Sensormittel (410) zugeordnet ist, das für jeden Fisch (9) die Position einer definierten, sämtlichen Fischen (9) gemeinsamen Körperstelle (91) feststellt und ein entsprechendes genanntes Förder-Steuersignal (S1) erzeugt.

5. Fisch-Zuführeinrichtung nach Anspruch 4, **dadurch gekennzeichnet, dass** das Positions-Sensormittel (410) zum Feststellen von einheitlichen, den gemeinsamen Körperstellen (91) zugeordneten Zugriffsstellen (92) der Fische (9) eingerichtet ist, die mit einem Bearbeitungs-Fördermittel (71) einer Fisch-Bearbeitungseinrichtung (7) erfassbar sind.

6. Fisch-Zuführeinrichtung nach einem der Ansprüche 1 bis 5, **dadurch gekennzeichnet, dass** das Abgabe-Fördermittel (3) zwei Förderelemente aufweist, die durch ein Paar von mittels des Positionierantriebs (35) im Abstand veränderbaren Flankenförderern (31) gebildet sind und zum Herstellen des ersten Zustands (301) und des dritten Zustandes (303) quer zur Fisch-Förderrichtung (F) in einen Öffnungsabstand auseinander bewegbar sowie zum Herstellen des zweiten Zustands (302) quer zur Fisch-Förderrichtung (F) in einen Schließabstand aufeinander zu bewegbar sind, wobei sie in dem zweiten Zustand (302) an den Flanken eines Fisches (9) derart zur Anlage kommen, dass die Fische (9) in Position mit aufgerichteter Fisch-Symmetrieebene (90) zu liegen kommen.

7. Fisch-Zuführeinrichtung nach einem der Ansprüche 1 bis 6, **dadurch gekennzeichnet, dass** der Ablageraum (11) ein Ablagemittel (12) aufweist, das durch ein Auffangmittel mit einer einen einzelnen Fisch (9) aufnehmenden Ruhestelle gebildet ist, an der der Fisch (9) während des ersten Zustands (301) sowie beim Herstellen und Erreichen des zweiten Zustands (302) des Abgabe-Fördermittels (3) zu liegen kommt.

8. Fisch-Zuführeinrichtung nach einem der Ansprüche 1 bis 7, **dadurch gekennzeichnet, dass** der Ablageraum (11) ein an ein Querschnittsprofil des Fisches (9) angepasstes Profil aufweist, durch das der Fisch (9) in eine zentrierte Position mit aufgerichteter Fisch-Symmetrieebene (90) setzbar ist.

9. Fisch-Zuführeinrichtung nach einem der Ansprüche 1 bis 8, **dadurch gekennzeichnet, dass** das Abgabe-Fördermittel (3) ein entlang desselben angeordnetes Stütz-Förderelement (32) aufweist, das den Fisch (9) während der Abgabe-Förderung stützt und ausrichtet.

10. Fisch-Zuführeinrichtung nach einem der Ansprüche 1 bis 9, **dadurch gekennzeichnet, dass** die Fisch-Zuführeinrichtung (1) eine Führungseinrichtung (140) aufweist, die den Fisch (9) zur Abgabe und während der Abgabe ausrichtet.

11. Fisch-Zuführeinrichtung nach Anspruch 10, **dadurch gekennzeichnet, dass** die Führungseinrichtung (140) durch eine Gleit-Führungsschiene (14) gebildet ist.

12. Fisch-Zuführeinrichtung nach Anspruch 10 oder 11, **dadurch gekennzeichnet, dass** die Führungseinrichtung (140) eine obere Führungseinrichtung (370) aufweist, die durch zwei einander gegenüberliegende Gleit-Führungswände (371) gebildet ist.

13. Fisch-Zuführeinrichtung nach einem der Ansprüche 10 bis 12, **dadurch gekennzeichnet, dass** die Führungseinrichtung (140) mit einem Ausschleusemechanismus (323) ausgebildet ist, der den Fisch (9) vor oder an der Fisch-Abgabestelle (42) im Fall einer Betriebsstörung gesteuert von der Fisch-Zuführeinrichtung (1) abgibt.

14. Fisch-Zuführeinrichtung nach einem der Ansprüche 1 bis 13, **dadurch gekennzeichnet, dass** die Fisch-Zuführeinrichtung (1) einen Transferabschnitt (321) aufweist, der an dem Abgabe-Fördermittel (3) frei hervorragt.

15. Fisch-Zuführeinrichtung nach einem der Ansprüche 1 bis 14, **dadurch gekennzeichnet, dass** die Fisch-Zuführeinrichtung (1) mit einer steuerbaren Beschickungseinrichtung (62) verbunden ist, die zur seriellen Einförderung von Fischen (9) in den Ablageraum (11) ausgebildet ist.

16. Fisch-Zuführeinrichtung nach einem der Ansprüche 1 bis 15, **dadurch gekennzeichnet, dass** die Fisch-Zuführeinrichtung (1) zum Beschicken des Ablageraums (11) mit Fischen (9) ein Beschickungsmittel (6) aufweist, das durch einen Beschickförderer (61) gebildet ist, der in den Ablageraum (11) mündet und so eingerichtet ist, dass die zum Beschicken herangeförderten Fische (9) einzeln und nacheinander in den Ablageraum (11) mit richtungsorientierter Längslage einförderbar sind.

17. Fisch-Übergabesystem (2), eingerichtet zur seriellen Übergabe von Fischen (9) an eine Fisch-Bearbeitungseinrichtung (7), umfassend eine Fisch-Zuführeinrichtung (1) und ein die Fische (9) von der Fisch-Zuführeinrichtung (1) an einer Fisch-Übernahmestelle (73) seriell übernehmendes Bearbeitungs-Fördermittel (71), das entlang eines Bearbeitungs-Förderweges im Abstand angeordnete Fisch-Mitnehmerelemente (72) aufweist, die jeweils an der Fisch-Übernahmestelle (73) zur Aufnahme und entlang des Bearbeitungs-Förderweges zum Transport eines Fisches (9) eingerichtet sind, wobei der Fisch-Übernahmestelle (73) eine Fisch-Abgabestelle (42) der Fisch-Zuführeinrichtung (1) zugeordnet ist, **dadurch gekennzeichnet, dass** die Fisch-Zuführeinrichtung (1) durch die mit dem Abgabe-Fördermittel (3) eingerichtete Fisch-Zuführeinrichtung (1) nach einem der Ansprüche 1 bis 16 gebildet ist.

18. Fisch-Übergabesystem nach Anspruch 17, **dadurch gekennzeichnet, dass** das elektrische Steuermittel (5) so eingerichtet ist, dass das wenigstens eine Förder-Steuersignal (S2) die Geschwindigkeit der Fisch-Mitnehmerelemente (72) sowie deren zeitliches Passieren der Fisch-Übernahmestelle (73) erfasst.

19. Fisch-Übergabesystem nach Anspruch 17 oder 18, **dadurch gekennzeichnet, dass** das elektrische Steuermittel (5) derart eingerichtet ist, dass die Fisch-Abgabegeschwindigkeit an der Fisch-Abgabestelle (42) in Übereinstimmung mit der Geschwindigkeit eines zugeordneten Fisch-Mitnehmerelements (72) an der Fisch-Übernahmestelle (73) gebracht wird.

20. Fisch-Übergabesystem nach einem der Ansprüche 17 bis 19, **dadurch gekennzeichnet, dass** zwischen dem Abgabe-Fördermittel (3) und der Fisch-Übernahmestelle (73) ein Transferabschnitt (321) eingerichtet ist, der den Fisch (9), während er mittels des Abgabe-Fördermittels (3) gefördert wird, auf ein zugeordnetes genanntes Mitnehmerelement (72) an der Fisch-Übernahmestelle (73) ausrichtet.

21. Fisch-Übergabesystem nach einem der Ansprüche 18 bis 20, **dadurch gekennzeichnet, dass** an der Fisch-Übernahmestelle (73) ein mit der elektrischen Steuereinrichtung (5) verbundenes Übernahme-Sensormittel (76) angeordnet ist, das die Fisch-Übernahme beobachtet und im Fall einer Störung ein entsprechendes Stör-Steuersignal abgibt.

22. Fisch-Übergabesystem nach einem der Ansprüche 18 bis 21, **dadurch gekennzeichnet, dass** an dem Bearbeitungs-Fördermittel (71) ein mit der elektrischen Steuereinrichtung (5) verbundenes Ausschleusemittel (77) angeordnet ist, das einen von dem Bearbeitungs-Fördermittel (71) geförderten, jedoch in Fehllage befindlichen Fisch (9) gesteuert ausschleust.

23. Verfahren zum maschinellen Zuführen von Fischen (9) an eine Fisch-Bearbeitungseinrichtung (7), wobei die Fische (9) einzeln an einer Ablagestelle (13) in eine Halteposition mit Längsausrichtung gebracht werden und mit einem Abgabe-Fördermittel (3) längs eines Abgabe-Förderwegs (4) gefördert und an einer Fisch-Abgabestelle (42) einer zugeordneten Fisch-Übernahmestelle (73) seriell zugeführt werden, die Fisch-Mitnehmerelemente (72) eines Bearbeitungs-Fördermittels (71) der Fisch-Bearbeitungseinrichtung (7) zur Übernahme der Fische (9) passieren, **dadurch gekennzeichnet, dass** die Fische (9) an der Ablagestelle (13) einzeln in die Halteposition innerhalb eines Zugriffsbereichs des Abgabe-Fördermittels (3) gebracht werden, wobei sie sich in der Halteposition zunächst außer Eingriff mit dem Abgabe-Fördermittel (3) befinden, dass das Abgabe-Fördermittel (3) mittels einer elektrischen Steuerung nach Maßgabe von wenigstens einem Förder-Steuersignal in einen Förderzugriff auf den in der Halteposition befindlichen Fisch (9) gesteuert wird und dass der in der Halteposition erfasste Fisch (9) längs des Abgabe-Förderwegs (4) zu der Fisch-Abgabestelle (42) bewegt und dort freigegeben wird, wobei der Förderzugriff, die Abgabe-Förderbewegung und die Freigabe mit einem Abgabe-Zeitpunkt und einer Abgabe-Geschwindigkeit, zugehörig zu jedem Fisch (9), im Einklang mit den die Fisch-Übernahmestelle (73) passierenden Fisch-Mitnehmerelementen (72) elektrisch gesteuert werden.

24. Verfahren nach Anspruch 23, **dadurch gekennzeichnet, dass** eine Fisch-Zuführeinrichtung (1) nach einem der Ansprüche 1 bis 16 verwendet wird.

25. Verfahren nach Anspruch 23 oder 24, **dadurch gekennzeichnet, dass** die Fische (9), während sie mit dem Abgabe-Fördermittel (3) gefördert werden, auf Mitnehmerelemente (72) des Bearbeitungs-Fördermittels (71) einer Fisch-Bearbeitungseinrichtung (7) ausgerichtet werden.

26. Verfahren nach einem der Ansprüche 23 bis 25, **dadurch gekennzeichnet, dass** die Abgabe-Geschwindigkeit an der Fisch-Abgabestelle (42) an wenigstens eine zugehörige Passiergeschwindigkeit der Mitnehmerelemente (72) an der Fisch-Übernahmestelle (73) angepasst wird.

27. Verfahren nach einem der Ansprüche 23 bis 26, **dadurch gekennzeichnet, dass** der Abgabe-Förderweg (4) an der Fisch-Abgabestelle (42) endet und mit einem eine Bezugsstelle (41) definierenden Weganfang beginnt, wobei mittels eines Positions-Sensormittels (410) in Bezug auf den Weganfang eine Fisch-Körperstelle (91) festgestellt wird, die sämtlichen Fischen (9) gemeinsam ist.

28. Verfahren nach Anspruch 27, **dadurch gekennzeichnet, dass** die Fische (9) das Positions-Sensormittel (410) beim Feststellen der Fisch-Körperstelle (91) passieren.

29. Verfahren nach einem der Ansprüche 23 bis 28, **dadurch gekennzeichnet, dass** die gesteuerte Abgabe der Fische (9) an der Fisch-Abgabestelle (42) wenigstens temporär intermittierend betrieben wird, derart, dass die Fisch-Abgabegeschwindigkeit zum Abgabe-Zeitpunkt Null beträgt oder kleiner oder größer als die Bearbeitungs-Fördergeschwindigkeit ist.

30. Verfahren nach einem der Ansprüche 23 bis 29, **dadurch gekennzeichnet, dass** an der Fisch-Übernahmestelle (73) die Fischübernahme mittels eines mit der Steuerung zusammenwirkenden Übernahme-Sensormittels (76) festgestellt wird und im Fall einer nicht erfolgten Fischübernahme auf ein Fisch-Mitnehmerelement (72) das Abgabe-Fördermittel (3) so gesteuert und betrieben wird, dass der Fisch (9) an der Fisch-Abgabestelle (42) zur Übernahme auf ein nachfolgendes Fisch-Mitnehmerelement (72) bis zur zugehörigen Freigabe, insbesondere mit einem Versatz der Fisch-Abgabestelle (42), gehalten wird.

31. Verfahren nach einem der Ansprüche 23 bis 30, **dadurch gekennzeichnet, dass** an der Fisch-Übernahmestelle (73) eine Nicht-Übernahme oder eine Fehl-Übernahme eines Fisches (9) auf ein Fisch-Mitnehmerelement (72) in Verbindung mit einem Ausschleusen des Fisches (9) aus dem Förderprozess festgestellt wird.

## Claims

1. Fish feed-in device (1), configured for the automatic serial receipt and delivery of fish (9) for feeding the fish (9) to a fish processing device (7), comprising a deposit space (11) receiving each fish (9) in the longitudinal position, a delivery conveying means (3), which grasps and holds the fish (9) in said longitudinal position, with which the fish (9) can be conveyed for successive delivery in the longitudinal position in this corresponding delivery conveying direction (300), **c haracterized in** that the delivery conveying means (3) is arranged and designed for immediate access to a fish (9) located in the deposit space (11) and is configured with a controllable positioning drive (35) and a controllable conveying drive (36), which are controllable with at least one conveying control signal (S3, S4) that is definitive for feeding the fish (9) in an adjusted manner to a production site of a fish processing device (7), wherein the delivery conveying means (3) can be moved by the controllable positioning drive (35) into a first state (301) released by the fish (9) in the deposit space (11), into a grasping second state (302) for grasping, centred holding and conveying of the fish (9) in the deposit space (11) and, in cooperation with the controllable conveying drive (36), into a third state (303) which releases the fish (9), after conveying, at a fish delivery point (42) which is defined by a controlled delivery time with associated controlled fish delivery speed.

2. Fish feed-in device according to claim 1, **characterized in that** the positioning drive (35) and the conveying drive (36) of the fish feed-in device (1) are connected to an electrical control means (5), which can be actuated by at least one said conveying control signal and which controls the discharge speed and the discharge time of each fish (9).

3. Fish feed-in device according to claim 1 or 2, **characterized in that** the fish delivery point (42) is determined by a delivery conveying path (4) which starts at a reference point (41) that is assigned to a uniform fish position and ends with a defined conveying length (400) at the fish delivery point (42).

4. Fish feed-in device according to claim 3, **characterized in that** a position sensor means (410) is assigned to the reference point (41), which position sensor means determines the position of a defined body point (91) common to all fish (9) for each fish (9) and generates a corresponding named conveying control signal (S1).

5. Fish feed-in device according to claim 4, **characterized in that** the position sensor means (410) is configured for detecting uniform access points (92) of the fish (9) which are assigned to the common body points (91), said access points being graspable with a processing conveying means (71) of a fish processing device (7).

6. Fish feed-in device according to one of claims 1 to 5, **characterized in that** the delivery conveying means (3) has two conveying elements which are formed by a pair of flank conveyors (31), which are adjustable in distance by the positioning drive (35) and can be moved apart into an opening distance transverse to the fish conveying direction (F) to establish the first condition (301) and the third condition (303) and can be moved towards each other into a closing distance transverse to the fish conveying direction (F) to establish the second state (302), wherein in the second state (302) they come to rest against the flanks of a fish (9) in such a manner that the fish (9) come to lie in a position with an upright fish symmetry plane (90).

7. Fish feed-in device according to one of claims 1 to 6, **characterized in that** the deposit space (11) has a deposit means (12) which is formed by a collecting means with a resting point which receives a single fish (9) at which the fish (9) comes to rest during the first state (301) and also on establishing and reaching the second state (302) of the delivery conveying means (3).

8. Fish feed-in device according to one of claims 1 to 7, **characterized in that** the deposit space (11) has a profile adapted to a cross-sectional profile of the fish (9), by which the fish (9) can be placed in a centred position with an upright fish symmetry plane (90).

9. Fish feed-in device according to one of claims 1 to 8, **characterized in that** the delivery conveying means (3) has a support conveying element (32) arranged along it which supports and orients the fish (9) during delivery conveying.

10. Fish feed-in device according to one of claims 1 to 9, **characterized in that** the fish feed-in device (1) has a guiding device (140) which orients the fish (9) for delivery and during delivery.

11. Fish feed-in device according to claim 10, **characterized in that** the guiding device (140) is formed by a sliding guide rail (14).

12. Fish feed-in device according to claim 10 or 11, **characterized in that** the guide device (140) has an upper guiding device (370) which is formed by two mutually opposing sliding guide walls (371).

13. Fish feed-in device according to one of claims 10 to 12, **characterized in that** the guide device (140) is designed with a discharge mechanism (323) which delivers the fish (9) before or at the fish delivery point (42), controlled by the fish feed-in device (1) in the event of an operational malfunction.

14. Fish feed-in device according to one of claims 1 to 13, **characterized in that** the fish feed-in device (1) has a transfer section (321) which protrudes freely on the delivery conveying means (3).

15. Fish feed-in device according to one of claims 1 to 14, **characterized in that** the fish feed-in device (1) is connected to a controllable loading device (62) which is designed for serially conveying fish (9) into the deposit space (11).

16. Fish feed-in device according to one of claims 1 to 15, **characterized in that** the fish feed-in device (1), for loading the deposit space (11) with fish (9), has a loading means (6) which is formed by a load conveyor (61) that opens into the deposit space (11) and is configured in such a manner that the fish (9) conveyed up to it for loading can be conveyed into the deposit space (11) individually and successively with a direction-oriented longitudinal position.

17. Fish transfer system (2), configured for serially transferring fish (9) to a fish processing device (7), comprising a fish feed-in device (1) and a processing conveying means (71), which serially transfers the fish (9) from the fish feed-in device (1) at a fish receiving point (73), said processing conveying means having fish carrier elements (72) spaced along a processing conveying path, said carrier elements each being configured at the fish receiving point (73) for receiving, and along the processing conveying path for transporting a fish (9), wherein a fish delivery point (42) of the fish feed-in device (1) is assigned to the fish receiving point (73), **characterized in that** the fish feed-in device (1) is formed by the fish feed-in device (1) equipped with the delivery conveying means (3) according to one of claims 1 to 16.

18. Fish transfer system according to claim 17, **characterized in that** the electrical control means (5) is configured in such a way that the at least one conveying control signal (S2) detects the speed of the fish carrier elements (72) as well as their chronological passing of the fish receiving points (73).

19. Fish transfer system according to claim 17 or 18, **characterized in that** the electrical control means (5) is configured in such a manner that the fish delivery speed at the fish delivery point (42) is correlated with the speed of an associated fish carrier element (72) at the fish receiving point (73).

20. Fish transfer system according to one of claims 17 to 19, **characterized in that** a transfer section (321) is configured between the delivery conveying means (3) and the fish receiving point (73), said transfer section orienting the fish (9), while it is being conveyed by the delivery conveying means (3), to an associated named carrier element (72) at the fish receiving point (73).

21. Fish transfer system according to one of claims 18 to 20, **characterized in that** a receiving sensor means (76) connected to the electrical control device (5) is arranged at the fish receiving point (73), said sensor observing the fish transfer and transmitting a corresponding fault control signal in the event of a malfunction.

22. Fish transfer system according to one of claims 18 to 21, **characterized in that** a discharge means (77) connected to the electrical control device (5) is arranged on the processing conveying means (71), said discharge means discharging a fish (9) which is conveyed by the processing conveying means (71) but is in the wrong position.

23. Method for automatically feeding feed (9) to a fish processing device (7), wherein the fish (9) are brought individually into a holding position with longitudinal orientation at a deposit point (13) and are conveyed with a delivery conveying means (3) along a delivery conveying path (4) and at a fish delivery point (42) are serially fed to an associated fish receiving point (73), the fish passing the fish carrier elements (72) of a processing conveying means (71) of the fish processing device (7) for transferring the fish (9), **characterized in that** the fish (9) are brought into the holding position individually at the deposit point (13) within a grasping region of the delivery conveying means (3), wherein in the holding position they are initially disengaged from said delivery conveying means (3) such that the delivery conveying means (3) is controlled by an electrical control system in compliance with at least one conveying control signal into a conveying grasp of the fish (9) located in the holding position and that the fish (9) caught in the holding position is moved along the delivery conveying path (4) to the fish delivery point (42) and is there released, wherein the conveying grasp, the delivery conveying movement and the release are electrically controlled with a delivery time and a delivery speed, associated with each fish (9), that is consistent with the fish carrier elements (72) which pass the fish receiving point (73).

24. Method according to claim 23, **characterized in that** a fish feed-in device (1) according to one of claims 1 to 16 is used.

25. Method according to claim 23 or 24, **characterized in that** the fish (9), while being conveyed with the delivery conveying means (3), are oriented on carrier elements (72) of the processing conveying means (71) of a fish processing device (7).

26. Method according to one of claims 23 to 25, **characterized in that** the delivery speed at the fish delivery point (42) is adapted to at least one associated passing speed of the carrier elements (72) at the fish receiving point (73).

27. Method according to one of claims 23 to 26, **characterized in that** the delivery conveying path (4) terminates at the fish delivery point (42) and starts with a path beginning defining a reference point (41), wherein a fish body point (91), which is common to all fish (9), is detected by a position sensor means (410) with respect to the path beginning.

28. Method according to claim 27, **characterized in that** the fish (9) pass the position sensor means (410) on detection of the fish body point (91).

29. Method according to one of claims 23 to 28, **characterized in that** the controlled delivery of the fish (9) at the fish delivery point (42) is operated, at least temporarily, intermittently in such a manner that the fish delivery speed at the time of delivery is zero or lower than or higher than the processing conveying speed.

30. Method according to one of claims 23 to 29, **characterized in that** the fish transfer at the fish receiving point (73) is detected by a receiving sensor means (76) cooperating with the control system and, in the event of a fish transfer to a fish carrier element (72) not being carried out, the delivery conveying means (3) is controlled and operated in such a manner that the fish (9) is held at the fish delivery point (42) until the associated release for transfer to a subsequent fish carrier element (72), in particular with an offset of the fish delivery point (42).

31. Method according to one of claims 23 to 30, **characterized in that** a non-transfer or a mis-transfer of a fish (9) to a fish carrier element (72) at the fish receiving point (73) is detected in conjunction with discharging the fish (9) out of the conveying process.

## Revendications

1. Dispositif d'amenée de poisson (1), conçu pour recevoir et livrer par machine et en série des poissons (9) pour amener lesdits poissons (9) vers un dispositif de traitement de poisson (7), comprenant un compartiment de stockage (11) recevant chaque poisson (9) en position longitudinale, un moyen de convoyage de livraison (3) saisissant et tenant le poisson (9) dans la position longitudinale, avec lequel les poissons (9) sont susceptibles d'être acheminés les uns à la suite des autres dans cette direction de convoyage de livraison (300) correspondante pour être livrés en position longitudinale, **caractérisé en ce que** le moyen de convoyage de livraison (3) est agencé et réalisé pour accéder directement à un poisson (9) se trouvant dans le compartiment de stockage (11), ainsi que mis au point doté d'un entraînement de positionnement (35) susceptible d'être commandé et d'un entraînement de convoyage (36) susceptible d'être commandé, lesquels peuvent être commandés par au moins un signal de commande de convoyage (S3, S4) qui est déterminant pour une amenée des poissons (9) adaptée à un convoyage en marche d'un dispositif de traitement de poissons (7), le moyen de convoyage de livraison (3) étant susceptible d'être transposé, au moyen de l'entraînement de positionnement (35) susceptible d'être commandé, dans un premier état (301) libéré du poisson (9) dans le compartiment de stockage (11), dans un deuxième état (302) d'accès au poisson (9) dans le compartiment de stockage (11) pour saisir, maintenir en position centrée et acheminer ledit poisson (9), et en collaboration avec l'entraînement de convoyage (36) susceptible d'être commandé, dans un troisième état (303) qui relâche le poisson (9) suite au convoyage à un point de livraison de poisson (42) défini par un moment de livraison commandé à vitesse de livraison de poisson commandée correspondante.

2. Dispositif d'amenée de poisson selon la revendication 1, **caractérisé en ce que** l'entraînement de positionnement (35) et l'entraînement de convoyage (36) du dispositif d'amenée de poisson (1) sont reliés à un moyen de commande électrique (5) qui est susceptible d'être excité par au moins un signal de commande de convoyage nommé et qui commande la vitesse de livraison et le moment de livraison de chaque poisson (9).

3. Dispositif d'amenée de poisson selon la revendication 1 ou 2, **caractérisé en ce que** le point de livraison de poisson (42) est déterminé par une trajectoire de convoyage de livraison (4) qui commence à un point de référence (41) associé à une position de poisson uniforme, et qui se termine par une distance de convoyage définie (400) au point de livraison de poisson (42).

4. Dispositif d'amenée de poisson selon la revendication 3, **caractérisé en ce qu'**est associé au point de référence (41) un capteur de position (410) qui pour chaque poisson (9) constate la position d'un point du corps (91) défini, commun à tous les poissons (9), et qui génère un signal de commande de convoyage (S1) nommé correspondant.

5. Dispositif d'amenée de poisson selon la revendication 4, **caractérisé en ce que** le capteur de position (410) est conçu pour constater des points d'accès (92) des poissons (9) uniformes et associés aux points du corps communs (91), lesquels sont susceptibles d'être saisis avec un moyen de convoyage de traitement (71) d'un dispositif de traitement de poisson (7).

6. Dispositif d'amenée de poisson selon l'une quelconque des revendications 1 à 5, **caractérisé en ce que** le moyen de convoyage de livraison (3) présente deux éléments de convoyage qui sont formés par une paire de convoyeurs sur flancs (31) dont l'espacement est susceptible d'être modifié au moyen de l'entraînement de positionnement (35) et qui, pour créer le premier état (301) et le troisième état (303) sont susceptibles d'être écartés l'un de l'autre d'une distance d'ouverture, transversalement au sens de convoyage de poisson (F), ainsi que, pour créer le deuxième état (302), sont susceptibles d'être déplacés l'un vers l'autre dans une distance de fermeture, transversalement au sens de convoyage de poisson (F), lesdits éléments de convoyage venant s'accoler dans le deuxième état (302) aux flancs d'un poisson (9) de telle sorte que les poissons (9) sont allongés en position avec plan de symétrie de poisson (90) redressé.

7. Dispositif d'amenée de poisson selon l'une quelconque des revendications 1 à 6, **caractérisé en ce que** le compartiment de stockage (11) présente un moyen de stockage (12) qui est formé par un moyen de collecte muni d'un point de repos recevant un seul poisson (9) sur lequel le poisson (9) est allongé au cours du premier état (301) ainsi qu'au moment où le deuxième état (302) du moyen de convoyage de livraison (3) est créé et atteint.

8. Dispositif d'amenée de poisson selon l'une quelconque des revendications 1 à 7, **caractérisé en ce que** le compartiment de stockage (11) présente un profil adapté à un profil de section du poisson (9) qui permet de placer le poisson (9) dans une position centrée à plan de symétrie de poisson (90) redressé.

9. Dispositif d'amenée de poisson selon l'une quelconque des revendications 1 à 8, **caractérisé en ce que** le moyen de convoyage de livraison (3) présente un élément de convoyage d'appui (32) agencé le long de celui-ci, lequel élément de convoyage d'appui (32) soutient et met le poisson (9) en position pendant le convoyage de livraison.

10. Dispositif d'amenée de poisson selon l'une quelconque des revendications 1 à 9, **caractérisé en ce que** le dispositif d'amenée de poisson (1) présente un dispositif de guidage (140) qui met le poisson (9) en position pour la livraison et pendant la livraison.

11. Dispositif d'amenée de poisson selon la revendication 10, **caractérisé en ce que** le dispositif de guidage (140) est formé par un rail de guidage par glissement (14).

12. Dispositif d'amenée de poisson selon la revendication 10 ou 11, **caractérisé en ce que** le dispositif de guidage (140) présente un dispositif de guidage supérieur (370) qui est formé par deux parois de guidage par glissement (371) en vis-à-vis l'une de l'autre.

13. Dispositif d'amenée de poisson selon l'une quelconque des revendications 10 à 12, **caractérisé en ce que** le dispositif de guidage (140) est constitué d'un mécanisme d'évacuation (323) qui livre le poisson (9) de manière commandée par le dispositif d'amenée de poisson (1) avant ou au point de livraison du poisson (42) en cas de dysfonctionnement.

14. Dispositif d'amenée de poisson selon l'une quelconque des revendications 1 à 13, **caractérisé en ce que** le dispositif d'amenée de poisson (1) présente un tronçon de transfert (321) qui dépasse librement en saillie au niveau du moyen de convoyage de livraison (3).

15. Dispositif d'amenée de poisson selon l'une quelconque des revendications 1 à 14, **caractérisé en ce que** le dispositif d'amenée de poisson (1) est relié à un dispositif d'alimentation (62) susceptible d'être commandé et qui est constitué pour introduire en série des poissons (9) dans le compartiment de stockage (11).

16. Dispositif d'amenée de poisson selon l'une quelconque des revendications 1 à 15, **caractérisé en ce que** le dispositif d'amenée de poisson (1) présente, pour alimenter en poissons (9) le compartiment de stockage (11), un moyen d'alimentation (6) qui est formé par un convoyeur d'alimentation (61) qui débouche dans le compartiment de stockage (11) et est conçu de telle sorte que les poissons (9) approchés pour l'alimentation sont susceptibles d'être introduits de manière individuelle et les uns après les autres dans le compartiment de stockage (11) en position longitudinale dans une orientation directionnelle.

17. Système de remise de poisson (2), conçu pour remettre en série des poissons (9) à un dispositif de traitement de poisson (7), comprenant un dispositif d'amenée de poisson (1) et un moyen de convoyage de traitement (71) reprenant en série les poissons (9) à partir du dispositif d'amenée de poisson (1) à un point de reprise de poisson (73), lequel moyen de convoyage de traitement (71) présente le long d'une trajectoire de convoyage de traitement, des éléments entraîneurs de poisson (72) agencés espacés, qui sont conçus respectivement pour recevoir au point de reprise de poisson (73) et pour transporter un poisson (9) le long d'une trajectoire de convoyage de traitement, un point de livraison de poisson (42) du dispositif d'amenée de poisson (1) étant associé au point de reprise de poisson (73), **caractérisé en ce que** le dispositif d'amenée de poisson (1) est formé par le dispositif d'amenée de poisson (1) selon l'une quelconque des revendications 1 à 16 conçu muni du moyen de convoyage de livraison (3).

18. Système de remise de poisson selon la revendication 17, **caractérisé en ce que** le moyen de commande électrique (5) est conçu de telle manière que l'au moins un signal de commande de convoyage (S2) détecte la vitesse des éléments entraîneurs de poisson (72) ainsi que le moment où ils passent au point de reprise de poisson (73).

19. Système de remise de poisson selon la revendication 17 ou 18, **caractérisé en ce que** le moyen de commande électrique (5) est conçu de telle manière que la vitesse de livraison de poisson au point de livraison de poisson (42) est ajustée à la vitesse d'un élément entraîneur de poisson (72) associé, au point de reprise de poisson (73).

20. Système de remise de poisson selon l'une quelconque des revendications 17 à 19, **caractérisé en ce qu'**est conçu entre le moyen de convoyage de livraison (3) et le point de reprise de poisson (73) un tronçon de transfert (321) qui met en position le poisson (9), pendant qu'il est acheminé à l'aide du moyen de convoyage de livraison (3), sur un élément entraîneur (72) associé nommé, au point de reprise de poisson (73).

21. Système de remise de poisson selon l'une quelconque des revendications 18 à 20, **caractérisé en ce qu'**est agencé, au point de reprise de poisson (73) un capteur de reprise (76) relié au dispositif de commande électrique (5), lequel capteur de reprise (76) observe la reprise du poisson et émet un signal de commande de panne correspondant en cas d'un dysfonctionnement.

22. Système de remise de poisson selon l'une quelconque des revendications 18 à 21, **caractérisé en ce qu'**est agencé, sur le moyen de convoyage de traitement (71), un moyen d'évacuation (77) relié au dispositif de commande électrique (5), lequel moyen d'évacuation (77) évacue un poisson (9) acheminé par le moyen de convoyage de traitement (71) mais se trouvant en mauvaise position.

23. Procédé d'amenée des poissons (9) par machine à un dispositif de traitement de poisson (7), les poissons (9) étant mis individuellement, à un point de livraison (13), dans une position où ils sont tenus dans le sens de la longueur, et acheminés avec un moyen de convoyage de livraison (3) le long d'une trajectoire de convoyage de livraison (4) et amenés en série à un point de livraison de poisson (42) d'un point de reprise de poisson (73) associé où passent des éléments entraîneurs de poisson (72) d'un moyen de convoyage de traitement (71) du dispositif de traitement de poisson (7) pour la reprise des poissons (9), **caractérisé en ce que** les poissons (9) sont mis individuellement, au point de livraison (13) dans la position de tenue au sein d'une zone d'accès du moyen de convoyage de livraison (3), position de tenue dans laquelle ils se trouvent d'abord hors de portée du moyen de convoyage de livraison (3), que le moyen de convoyage de livraison (3) est commandé au moyen d'une commande électrique en fonction d'au moins un signal de commande de convoyage dans un accès de convoyage sur le poisson (9) se trouvant dans la position de tenue, et que le poisson (9) saisi dans la position de tenue est déplacé le long de la trajectoire de convoyage de livraison (4) vers le point de livraison de poisson (42) pour y être relâché, l'accès de convoyage, le mouvement de convoyage de livraison et le relâchement, avec un moment de livraison et une vitesse de livraison particuliers à chaque poisson (9), sont commandés électriquement en phase avec les éléments entraîneurs de poisson (72) passant au point de reprise de poisson (73).

24. Procédé selon la revendication 23, **caractérisé en ce qu'**est mis en oeuvre un dispositif d'amenée de poisson (1) selon l'une quelconque des revendications 1 à 16.

25. Procédé selon la revendication 23 ou 24, **caractérisé en ce que** les poissons (9) sont mis en position sur des éléments entraîneurs (72) du moyen de convoyage de traitement (71) d'un dispositif de traitement de poisson (7) pendant qu'ils sont acheminés avec le moyen de convoyage de livraison (3).

26. Procédé selon l'une quelconque des revendications 23 à 25, **caractérisé en ce qu'**au point de livraison de poisson (42), la vitesse de livraison est adaptée à au moins une vitesse de passage correspondante des éléments entraîneurs (72) au point de reprise de poisson (73).

27. Procédé selon l'une quelconque des revendications 23 à 26, **caractérisé en ce que** la trajectoire de livraison (4) se termine au point de livraison de poisson (42) et commence avec un début de trajectoire définissant un point de référence (41), étant constaté au moyen d'un capteur de position (410) par rapport au début de la trajectoire, un endroit du corps de poisson (91) qui est commun à tous les poissons (9).

28. Procédé selon la revendication 27, **caractérisé en ce que** les poissons (9) passent par le capteur de position (410) au moment où ils constatent l'endroit du corps du poisson (91).

29. Procédé selon l'une quelconque des revendications 23 à 28, **caractérisé en ce que** la livraison commandée des poissons (9) au point de livraison de poisson (42) marche au moins temporairement par intermittence de sorte qu'au moment de la livraison la vitesse de livraison de poisson est égale à zéro ou est inférieure ou supérieure à la vitesse de convoyage de traitement.

30. Procédé selon l'une quelconque des revendications 23 à 29, **caractérisé en ce qu'**au point de reprise de poisson (73) la reprise de poisson est constatée au moyen d'un capteur de reprise (76) coopérant avec la commande, et en cas où une reprise de poisson ne s'est pas effectuée sur un élément entraîneur de poisson (72), le moyen de convoyage de livraison (3) est commandé et actionné de telle sorte que le poisson (9) est maintenu au point de livraison de poisson (42) pour être repris sur un élément entraîneur de poisson (72) suivant jusqu'au relâchement correspondant, notamment avec un décalage du point de livraison de poisson (42).

31. Procédé selon l'une quelconque des revendications 23 à 30, **caractérisé en ce qu'**au point de reprise de poisson (73), une non-reprise ou une reprise manquée du poisson (9) sur un élément entraîneur de poisson (72) est constatée en combinaison avec une évacuation du poisson (9) hors du processus de convoyage.
